# EUROPEAN PATENT APPLICATION

(11) **EP 4 807 034 A1**
(43) Date of publication of application: **16.09.2026**
(21) Application number: 24903588.2
(22) Date of filing: 04.12.2024
(51) Int. Cl.: C22C 38/00, C21D 8/12, H01F 1/147, C22C 38/60

(54) **GRAIN-ORIENTED ELECTRICAL STEEL SHEET AND METHOD FOR MANUFACTURING SAME**

(30) Priority: 13.12.2023 JP 2023210622
(71) Applicant: JFE Steel Corporation, Tokyo 100-0011 (JP)
(72) Inventor: NAKAMURA Koji, Tokyo 100-0011 (JP); INOUE Hirotaka, Tokyo 100-0011 (JP); OMURA Takeshi, Tokyo 100-0011 (JP)
(74) Representative: Hoffmann Eitle
(86) International application number: PCT/JP2024/042961
(87) International publication number: WO 2025/126931

(57) **Abstract**

Magnetic domain refining by groove formation and magnetic domain refining by tension application are realized without increasing the building factor. In a grain-oriented electrical steel sheet having grooves aligned at defined positions on the steel sheet and including a forsterite film and an insulating coating on both sides of the steel sheet, the Ra of the forsterite film at the center of the grooves is 5.00 µm or more, and an average thickness of the insulating coating at the bottom of the grooves is 1.50 µm or more.

## Description

### TECHNICAL FIELD

The present disclosure relates to grain-oriented electrical steel sheets and methods of producing same. The present disclosure particularly relates to a grain-oriented electrical steel sheet suitable for an iron core material of a transformer or the like, and a method of producing same.

### BACKGROUND

Grain-oriented electrical steel sheets that have a crystal texture in which the <001> orientation, which is the easy magnetization axis of iron, is highly aligned in the rolling direction of the steel sheet, are used particularly as iron core material for electrical power transformers. Transformers are broadly classified into laminate iron core transformers and coil iron core transformers based on their iron core structure. A laminate iron core transformer has an iron core formed by stacking steel sheets cut to a defined shape. On the other hand, a coil iron core transformer has an iron core formed by coiling steel sheets one on top of the other. There are various properties required for a transformer iron core, but what is particularly important is that the iron loss be reduced to a low value. There is a strong demand every year for the development of transformer materials that have the performance required to reduce such iron loss.

In view of the above, low iron loss is an important property required for grain-oriented electrical steel sheets that are iron core material. One of the techniques for reducing iron loss in grain-oriented electrical steel sheets is magnetic domain refining. Magnetic domain refining techniques are divided into heat-resistant and non-heat-resistant types. In the case of the coil iron core described above, stress relief annealing is carried out in the production process, and therefore the grain-oriented electrical steel sheets used in the coil iron core require heat-resistant magnetic domain refining. A known heat-resistant magnetic domain refining technique is to form grooves on the steel sheet surface.

For example, in Patent Literature (PTL) 1, a technique is described of refining magnetic domains by forming grooves having a depth of more than 5 µm on a steel substrate portion of a steel sheet after being subjected to final annealing at a load of 882 MPa to 2156 MPa (90 kgf/mm² to 220 kgf/mm²), and then subjecting the steel sheet to heat treatment at a temperature of 750 °C or higher. In PTL 2, a technique is proposed of forming grooves having an asymmetric shape in the groove width direction with the groove width center as a reference, and controlling an average depth of the grooves, the arithmetic mean height Ra of a roughness curve that forms an outline of a groove floor region of the grooves, and an average length RSm of the roughness curve elements that form the outline of the groove floor region. In PTL 3, a technique is proposed of controlling groove depth, groove width, Ra value of the roughness of the groove floor, and Ra value of the roughness of the groove side surface within specific ranges.

### CITATION LIST

### Patent Literature

PTL 1: JP S62-53579 B2
PTL 2: WO 2016/171130 A1
PTL 3: JP 2022-022494 A

### SUMMARY

### (Technical Problem)

Although application of the above-mentioned conventional techniques can achieve a certain degree of iron loss reduction, there is currently a demand for even further reduction in iron loss. As a magnetic domain refining technique other than the above-mentioned groove forming techniques, applying tension to grain-oriented electrical steel sheets to refine magnetic domains and reduce iron loss is known. The application of tension to the steel sheet improves as the thickness of a forsterite film and insulating coating increases. On the other hand, when these two coatings become thick, there is a problem in that when assembled into a transformer iron core, the volume fraction of the steel sheets in the transformer iron core, known as the stacking factor, decreases.

Here, the ratio of the iron loss value when a grain-oriented electrical steel sheet is used as the iron core of a transformer (transformer core loss) to the iron loss value of the material obtained in the Epstein test (grain-oriented electrical steel sheet) is typically called the building factor (BF) or distraction factor (DF). Hereinafter, this is referred to as the BF. Reduction of the BF is also an item that should be considered as a property required for grain-oriented electrical steel sheets. The BF increases when the stacking factor decreases. Therefore, from the viewpoint of reducing the BF, it is desirable to make coating thickness thin.

The present disclosure is made in view of the above circumstances, and it would be helpful to propose a method of realizing magnetic domain refining by improving the tension on the steel sheet surface in addition to magnetic domain refining by forming grooves, without increasing the BF.

### (Solution to Problem)

The inventors conducted intensive studies to address the problems stated above. As a result, by thickening the insulating coating formed on the grooves, particularly on the bottom of the grooves, the tension in the rolling direction generated in the portions where the grooves exist is improved, and the amount of magnetic charge generated on wall surfaces of the grooves is increased. As a result, it was discovered that magnetic domain refining was achieved, resulting in reduced iron loss. The inventors further discovered that this method does not cause a decrease in the stacking factor, which is a problem when an insulating coating is made thicker, because the thickness of the insulating coating is increased only in the portions of the steel sheet surface where grooves are present.

Based on the above discoveries, the inventors attempted to form a thickened insulating coating in the grooves by introducing a coating solution for forming an insulating coating into grooves formed in the surface of a grain-oriented electrical steel sheet and then carrying out flattening annealing. However, it was confirmed that the insulating coating had poor adhesion and peeled off easily. Therefore, the inventors have conducted intensive studies to solve the above-mentioned problem of coating peeling. As a result, the inventors discovered that by increasing the surface roughness of the forsterite film formed in a defined location in the groove to a defined degree, the adhesion of the insulating coating formed thereon can be improved, leading to the present disclosure.

Further, the inventors have also clarified that damage to the forsterite film has a large effect on the magnitude of the tension in the groove in the rolling direction. Further, the inventors discovered that by suppressing such damage, it is possible to obtain an even greater and more stable iron loss reduction effect.

Based on the above further discoveries, the inventors confirmed that the forsterite film formed on the surface of a grain-oriented electrical steel sheet has many cracks, and searched for a method of suppressing such cracking. As a result, the inventors discovered that damage to the forsterite film, typified by cracks, is mainly caused by the shape adjustment of a steel sheet during flattening annealing after final annealing. The inventors also discovered that by carrying out final annealing on a coiled steel sheet coiled with the grooved surface facing outward, the generation of tensile stress that causes cracks to occur during subsequent shape adjustment is suppressed, and the frequency of crack occurrence is greatly reduced, leading to a more preferred technical improvement.

Primary features of the present disclosure are described below.
[1] A grain-oriented electrical steel sheet comprising, on one or both sides of a steel sheet, grooves extending linearly in a direction transverse to the rolling direction of the steel sheet and arranged at intervals along the rolling direction, and, on both sides of the steel sheet, a forsterite film and an insulating coating in this order from the steel sheet surface, wherein,
   in a cross-section perpendicular to the extension direction of the grooves, the forsterite film formed at a center position of the grooves has a surface roughness Ra of 5.00 µm or more, and the insulating coating at the bottom of the grooves has an average thickness of 1.50 µm or more.
[2] The grain-oriented electrical steel sheet according to [1], wherein the forsterite film formed in the grooves has a roughness coefficient of 0.8 or less.
[3] A method of producing a grain-oriented electrical steel sheet, the method comprising: hot rolling a slab for a grain-oriented electrical steel sheet to obtain a hot-rolled sheet; then subjecting the hot-rolled sheet to hot-rolled sheet annealing as required to obtain a hot-rolled and annealed sheet; then cold rolling the hot-rolled sheet or the hot-rolled and annealed sheet once or twice or more with intermediate annealing therebetween to finish the cold-rolled sheet to a final sheet thickness; then subjecting the cold-rolled sheet to decarburization annealing to obtain a decarburized annealed sheet; then applying an annealing separator mainly composed of MgO to the surface of the decarburized annealed sheet; then subjecting the decarburized annealed sheet to final annealing to obtain a final-annealed sheet; and then applying an insulating coating to the final-annealed sheet, the method further comprising:
   (1) before applying the annealing separator, forming grooves on one or both surfaces of the hot-rolled sheet, the hot-rolled and annealed sheet, the cold-rolled sheet, or the decarburized annealed sheet, the grooves extending linearly in a direction transverse to the rolling direction of the steel sheet and arranged at intervals along the rolling direction;
   (2) after applying the annealing separator to at least the surface or surfaces of the decarburized annealed sheet on which the grooves are formed, wiping off the annealing separator, and then applying annealing separator to both surfaces of the decarburized annealed sheet; and
   (3) after applying the insulating coating to at least the surface or surfaces of the final-annealed sheet on which the grooves are formed, wiping off the insulating coating, and then applying insulating coating to both surfaces of the final-annealed sheet.
[4] The method of producing a grain-oriented electrical steel sheet according to [3], wherein a doctor blade is used to wipe off the annealing separator and the insulating coating.
[5] The method of producing a grain-oriented electrical steel sheet according to [3] or [4], wherein, when the decarburized annealed sheet to which the annealing separator has been applied is subjected to the final annealing, the decarburized annealed sheet is formed into a coil shape with the surface or one of the surfaces on which the grooves are formed being arranged on the coil outer side, and then the final annealing is carried out.

### (Advantageous Effect)

According to the present disclosure, by roughening the forsterite film and thickening the insulating coating in the grooves formed on the surface of the grain-oriented electrical steel sheet, stronger tension is generated in the rolling direction of the steel sheet, promoting magnetic domain refining. As a result, it is possible to further reduce iron loss and achieve a low BF.

Further, according to the production method of the present disclosure, by applying an annealing separator to the grooves present on the surface of a decarburized annealed sheet and further providing an insulating coating to the grooves present on the surface of a final-annealed steel sheet, magnetic domain refining can be promoted as described above. As a result, it is possible to achieve both reduced iron loss and a low BF.

Further, according to the preferred technical improvement, the degree of damage to the forsterite film is also reduced, thereby further promoting magnetic domain refining. As a result, it is possible to achieve both lower iron loss and lower BF.

### BRIEF DESCRIPTION OF THE DRAWINGS

In the accompanying drawings:
FIG. 1 is a cross-section diagram illustrating a groove in a steel sheet; and
FIG. 2 includes cross-section diagrams illustrating a groove in a steel sheet at two positions spaced apart in the extension direction.

### DETAILED DESCRIPTION

The following is a detailed description of preferred embodiments of the present disclosure. Unless otherwise specified, the notation "A to B" for numerical values A and B means "greater than or equal to A and less than or equal to B". In such notation, when a unit is assigned only to the numerical value B, the unit is also applied to the numerical value A.

### (Grain-oriented electrical steel sheet)

The grain-oriented electrical steel sheet (hereinafter sometimes referred to simply as steel sheet) according to the present disclosure has, on one or both sides of the steel sheet, grooves that extend linearly in a direction transverse to the rolling direction of the steel sheet (hereinafter sometimes referred to simply as the rolling direction) and are arranged at intervals along the rolling direction, and includes, on both sides of the steel sheet, a forsterite film and an insulating coating, in that order from the steel sheet surface side. Further, it is essential that the steel sheet of the present disclosure has an average thickness of the insulating coating at the bottom of the grooves of 1.50 µm or more, and that in a cross-section perpendicular to the extension direction of the groove, Ra of the forsterite film surface at a center position in the groove is 5.00 µm or more.

Further, in a preferred grain-oriented electrical steel sheet, it is desirable that the roughness coefficient of the forsterite film formed in the grooves is 0.8 or less.

The grain-oriented electrical steel sheet according to the present disclosure can be suitably obtained, for example, by the method of producing a grain-oriented electrical steel sheet according to the present disclosure, described below.

### [Grooves]

The grooves are preferably formed on the steel sheet surface with an interval between adjacent grooves in the rolling direction of 1 mm or more. The interval is more preferably 2 mm or more. The interval is preferably 20 mm or less. The interval is more preferably 10 mm or less. When the interval is less than 1 mm, the magnetic domain refining effect may saturate and hardly any eddy current loss reduction effect may be obtained. Moreover, the strain increases hysteresis loss, which is undesirable as it tends to increase iron loss and BF. On the other hand, when the interval exceeds 20 mm, the magnetic domain refining effect decreases, and the iron loss and BF improvement effects become insufficient, which is undesirable. The groove interval is preferably 1 mm to 20 mm. The groove interval is more preferably 2 mm to 10 mm.

There are no particular restrictions on the groove formation pattern, but it is preferable to have grooves on both sides of the steel sheet, rather than having them on only one side of the steel sheet. When the grooves are parallel to each other and in the same positions on both sides, this increases the magnetostatic energy at the grooves and strengthens the magnetic domain refining effect, which is desirable.

Further, when the grooves are parallel to each other and positioned alternating on both sides of the steel sheet, the magnetic domain length in the rolling direction becomes shorter, which increases the magnetostatic energy and further enhances the magnetic domain refining effect, which is desirable.

Further, when the grooves are on both surfaces of the steel sheet at positions such that the grooves on a front surface intersect with the grooves on a back surface, the magnetostatic energy in the grooves becomes larger where the grooves intersect, and the magnetic domain length in the rolling direction becomes shorter where the grooves do not intersect, compared to when the grooves are parallel, and therefore the magnetostatic energy increases and the magnetic domain refining effect becomes stronger, which is desirable.

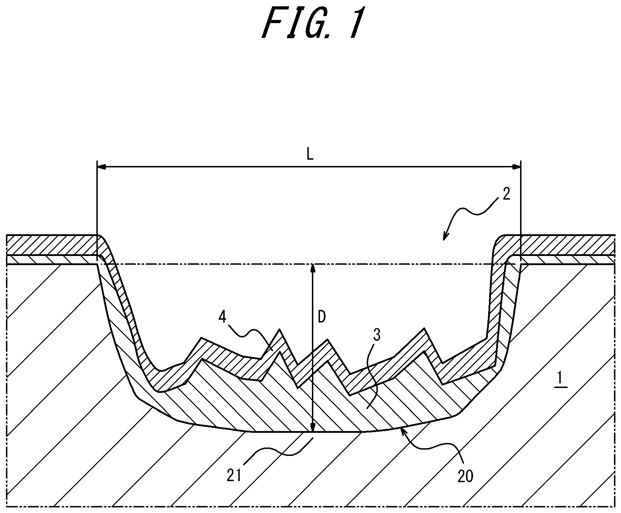

FIG. 1 is a cross-section diagram of a groove 2 formed in a grain-oriented electrical steel sheet (steel sheet) 1 according to an embodiment of the present disclosure, taken along a line perpendicular to the extension direction of the groove. In FIG. 1, the groove 2 has a shape close to a trapezoid in cross-section, but the shape of the groove 2 is not particularly limited, and it may have, for example, an arch cross-section. In an embodiment of the grain-oriented electrical steel sheet of the present disclosure, a depth D of the groove 2 is preferably 10 µm or more. The depth D is preferably 50 µm or less. The depth D is more preferably in the range of 10 µm to 50 µm.

Referring to FIG. 1, the depth D of the groove 2 is the length of a perpendicular dropped from the center of the opening width of the groove 2 in the rolling direction to a bottom portion 20. The opening width is defined as a distance L between opening side edges of both side walls defining the groove 2 along an imaginary extension line of the opening of the groove 2 from the surface of the steel sheet 1.

When the depth D of the groove 2 is less than 10 µm, the amount of magnetic charge generated from the wall surface of the groove 2 becomes small, and there is a risk that a sufficient iron loss reduction effect is not obtainable. On the other hand, when the depth D exceeds 50 µm, the magnetic domains are subdivided, but the reduction in magnetic flux density due to the formation of the grooves becomes large, and there is a risk that a sufficient iron loss reduction effect is not obtainable. The depth D is more preferably 15 µm or more. The depth D is more preferably 30 µm or less. The depth D is even more preferably 15 µm to 30 µm.

As illustrated in FIG. 1, the grain-oriented electrical steel sheet of the present disclosure includes the steel sheet 1 having the grooves 2 on at least one surface, and a forsterite film 3 and an insulating coating 4 on both surfaces thereof, in that order from the surface side. When the steel sheet 1 has the grooves 2 on both sides, the forsterite film 3 and the insulating coating 4 are formed on the grooves 2 on both sides of the steel sheet 1. When the steel sheet 1 has the grooves 2 on one side, the forsterite film 3 and the insulating coating 4 are formed on the grooves 2 only on that one side of the steel sheet 1. The forsterite film 3 and the insulating coating 4 can be formed in the steel sheet base metal portion excluding the grooves 2 in accordance with a typical method for grain-oriented electrical steel sheets. In contrast, in the grooves 2, it is essential to specify the surface roughness of the forsterite film 3 and the average thickness of the insulating coating 4 as follows.

### [Surface roughness Ra of forsterite film formed at center position of groove in cross-section perpendicular to extension direction of groove is 5.00 µm or more]

First, the "center position of the groove in a cross-section perpendicular to the extension direction of the groove" is a position (center 21) of a perpendicular passing through the center of the opening width of the groove 2 and dropping to the bottom 20, as illustrated in FIG. 1. The arithmetic mean roughness Ra of a roughness curve measured over a defined distance (for example, a length of 30 mm) along the extension direction of the groove 2 on the surface of the forsterite film 3 on this perpendicular is the "surface roughness Ra of the forsterite film formed at the center position of the groove in a cross-section perpendicular to the extension direction of the groove". Hereinafter, this is also simply referred to as "surface roughness of the forsterite film".

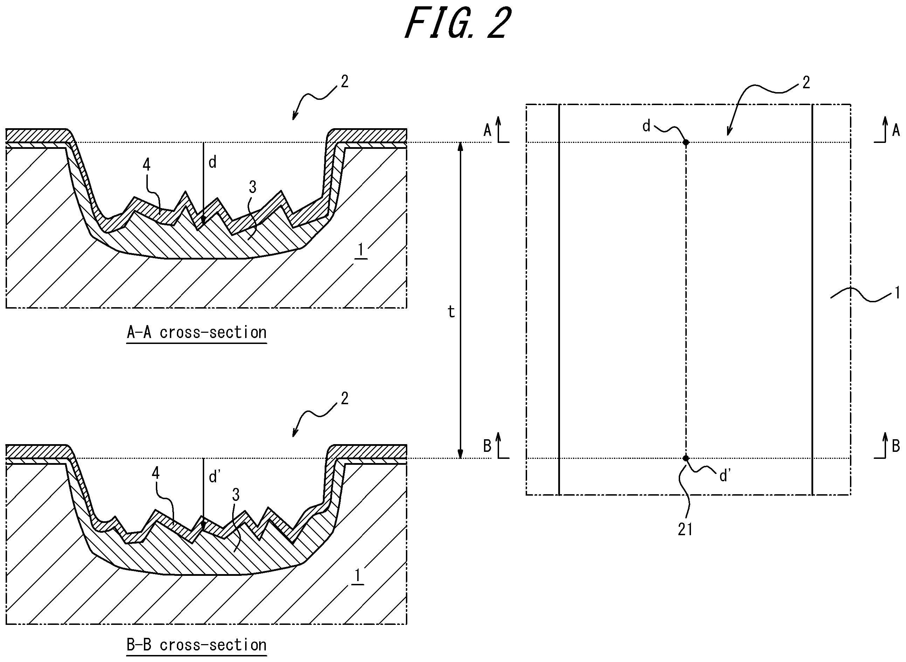

The surface roughness of the forsterite film is specifically described with reference to FIG. 2. FIG. 2 illustrates a top view of the steel sheet 1 with the groove 2 on the right side of the drawing. Further, cross-section diagrams of the groove are illustrated on the left side of the drawing, corresponding to two different positions along the extension direction of the groove in the top view. That is, in FIG. 2, groove cross-sections corresponding to positions spaced a defined distance t in the extension direction of the groove 2 are illustrated as A-A cross-section and B-B cross-section. In FIG. 2, the surfaces of the forsterite film 3 at the center in the rolling direction at positions spaced apart by the defined distance t are indicated as d and d'. The surface roughness of the forsterite film 3 on the line connecting these points d and d' can be measured as the arithmetic mean roughness Ra of the roughness curve. The defined distance t may be any length, and may be about 30 mm to 50 mm. This is because it is meaningless to achieve the conditions locally; it is necessary that the conditions be achieved on average across the groove of the steel sheet, and that the conditions be achieved in a region longer than the width of at least one crystal grain.

The definition of the arithmetic mean roughness Ra of the roughness curve is in accordance with Japanese Industrial Standard JIS B0601 (2013).

It is essential that the surface roughness Ra of the forsterite film be 5.00 µm or more. That is, when the surface roughness Ra of the forsterite film is less than 5.00 µm, the adhesion of the insulating coating on the forsterite film decreases, and the insulating coating becomes more likely to peel off. Therefore, it is thought that by setting Ra to 5.00 µm or more, the surface area per unit groove of the forsterite film increases, resulting in a larger adhesion area with the insulating coating and improved coating adhesion. Ra is preferably 6.00 µm or more. Ra is more preferably 7.00 µm or more.

On the other hand, there is no particular upper limit for Ra, but if Ra exceeds 20.00 µm, the forsterite film itself may become embrittled. Ra is therefore preferably 20.00 µm or less. Ra is more preferably 15.00 µm or less. Ra is even more preferably 10.00 µm or less.

### [Method of measuring surface roughness Ra of forsterite film]

Ra can be measured using a laser microscope (a 3D laser microscope using a pinhole confocal optical system). That is, any one of the grooves formed in the grain-oriented electrical steel sheet is selected, and as illustrated in FIG. 2, positions (A) and (B) of the groove are determined at two points spaced apart by t: 30 mm in the extension direction. Then, along a straight line connecting surface positions d and d' of the forsterite film 3 corresponding to the rolling direction center of the bottom of the groove (groove floor), the surface roughness of the forsterite film is measured as the arithmetic mean roughness Ra of the roughness curve. The above measurement is carried out for any 20 grooves, and the average value of the 20 grooves obtained is taken as the surface roughness Ra of the forsterite.

Here, when a sample before flattening annealing and application of an insulating coating liquid is used for measurement, Ra can be measured as is. On the other hand, when a sample to which an insulating coating liquid has been applied is used for measurement, Ra may be measured after removing the insulating coating with an alkaline solution (for example, a sodium hydroxide solution).

### [Roughness coefficient of forsterite film formed in grooves is 0.8 or less]

The roughness coefficient of the forsterite film formed in the grooves is preferably 0.8 or less. When the roughness coefficient of the forsterite film present in the grooves is greater than 0.8, this means that the porosity of the forsterite film is relatively large. As a result, the tension applied by the insulating coating on the forsterite film is not fully reflected in the steel sheet, which is likely to cause variations in properties such as iron loss and BF. Therefore, in order to further enhance the effect of improving the tensile properties by thickening the forsterite film formed in the grooves, it is desirable to reduce the porosity of the forsterite film in the grooves. Specifically, the roughness coefficient is preferably 0.8 or less. The roughness coefficient is more preferably 0.6 or less. The roughness coefficient is even more preferably 0.4 or less.

On the other hand, there is no particular lower limit to the roughness coefficient of the forsterite film formed in the grooves. From the viewpoint of sufficiently covering the grooves with the forsterite film, the roughness coefficient is preferably 0.05 or more.

### [Method of measuring roughness coefficient of forsterite film formed in grooves]

First, the specific surface area of a sample on which no grooves are formed and on which a forsterite film is formed is measured by a gas adsorption method using Kr gas. Then, from the results, the true surface area, including minute irregularities on the surface, is calculated and divided by the apparent surface area as if the surface were completely smooth. In this way, for the steel sheet surface other than the grooves, the surface roughness coefficient of the grain-oriented electrical steel sheet for which the forsterite film is formed on the steel sheet surface is derived.

Next, the specific surface area of the sample containing the grooves on which the forsterite film is formed is measured by the gas adsorption method using Kr gas in the same manner as above, and the true surface area including minute irregularities on the surface is calculated. For the sample containing the grooves, the apparent surface area of the portion other than the grooves is then calculated. By multiplying this by the roughness coefficient of the sample not containing the grooves calculated earlier, the true surface area is calculated of the portion other than the grooves for the sample containing the grooves.

The difference between this result (the true surface area of the portion other than the grooves for the sample containing grooves) and the true surface area derived from the result of the specific surface area in the sample containing grooves is taken as the true surface area of the groove portion. The true surface area of the groove portion is then divided by the apparent surface area of the grooves, and then further divided by Ra to derive the roughness coefficient of the forsterite film formed in the grooves. This makes it possible to evaluate the amount of microcracks that cannot be evaluated by the surface roughness Ra.

In summary, the roughness coefficient (unit: µm⁻¹) of the forsterite film formed in the grooves can be calculated by the following expression (1).$True surface area of grooves / \left(apparent surface area of grooves\times Ra\right)$

Here, Ra is the surface roughness (µm) of the forsterite film formed at the center of the groove in a cross-section perpendicular to the extension direction of the grooves, and can be measured by the method described above.

### [Average thickness of insulating coating at bottom of grooves is 1.50 µm or more]

It is also essential that the average thickness of the insulating coating at the bottom of the grooves (groove floor) is 1.50 µm or more. That is, when the average thickness of the insulating coating at the above-mentioned location is less than 1.50 µm, no further improvement in iron loss is achieved. The mechanism by which an insulating coating having an average thickness of 1.50 µm or more exhibits an effect is unclear, but it is thought that as the insulating coating becomes thicker, the tension in the grooves increases locally, improving the magnetic domain refining effect. The average thickness of the insulating coating at the bottom of the grooves is preferably 1.70 µm or more.

Further, although depending on the thickness of the forsterite film formed in the grooves, for example, the average thickness of the insulating coating at the bottom of the grooves is preferably 20 µm or less. The average thickness is more preferably 10 µm or less.

### [Method of measuring average thickness of insulating coating at bottom of grooves]

Using a scanning electron microscope, for example, cross-section images along the rolling direction including the groove cross-section of FIG. 1 are obtained from 30 or more fields of view, with a width of 100 µm to 200 µm in the rolling direction × the total thickness of the sheet being one field of view. Preferably, cross-section images are acquired for 30 or more different grooves. These images are interpreted to identify the interface between the forsterite film and the insulating coating and the surface position of the insulating coating, and the average thickness of the insulating coating at the bottom of the groove is calculated for each image. Further, the average thickness of all the cross-section images obtained is taken as the average thickness of the insulating coating at the bottom of the grooves.

In this measurement, of the portion of the recess that defines the groove, the "bottom" of a groove is determined as corresponding to the central 80 % of the opening width in the rolling direction. The "side walls" of a groove is defined as the portion of the recess defining the groove excluding the "bottom", that is, the portion corresponding to 10 % of the opening width in the rolling direction from both sides of the edge of the steel sheet surface defining the groove.

### [Method of evaluating adhesion of insulating coating]

The adhesion of the insulating coating can be evaluated in terms of peelability when the shape of the steel sheet is deformed. Specifically, the evaluation can be carried out by a bending peeling test in which the steel sheet is wrapped around a round bar and the smallest diameter at which no coating peeling occurs is determined. The smaller the minimum diameter at which peeling of the coating does not occur, the less peeling occurs, and therefore the better the adhesion.

### (Method of producing grain-oriented electrical steel sheet)

It is essential that the method of producing a grain-oriented electrical steel sheet includes: hot rolling a slab for a grain-oriented electrical steel sheet to obtain a hot-rolled sheet; then subjecting the hot-rolled sheet to hot-rolled sheet annealing as required to obtain a hot-rolled and annealed sheet; then cold rolling the hot-rolled sheet or the hot-rolled and annealed sheet once or twice or more with intermediate annealing therebetween to finish the cold-rolled sheet to a final sheet thickness; then subjecting the cold-rolled sheet to decarburization annealing to obtain a decarburized annealed sheet; then applying an annealing separator mainly composed of MgO to the surface of the decarburized annealed sheet; then subjecting the decarburized annealed sheet to final annealing to obtain a final-annealed sheet; and then applying an insulating coating to the final-annealed sheet, and further includes:
(1) before applying the annealing separator, forming grooves on one or both surfaces of the hot-rolled sheet, the hot-rolled and annealed sheet, the cold-rolled sheet, or the decarburized annealed sheet, the grooves extending linearly in a direction transverse to the rolling direction of the steel sheet and arranged at intervals along the rolling direction;
(2) after applying the annealing separator to at least the surface or surfaces of the decarburized annealed sheet on which the grooves are formed, wiping off the annealing separator, and then applying annealing separator to both surfaces of the decarburized annealed sheet; and
(3) after applying the insulating coating to at least the surface or surfaces of the final-annealed sheet on which the grooves are formed, wiping off the insulating coating, and then applying insulating coating to both surfaces of the final-annealed sheet.

According to the production method of the present disclosure, the grain-oriented electrical steel sheet of the present disclosure can be obtained satisfactorily, and therefore the same effects as those of the grain-oriented electrical steel sheet of the present disclosure can be achieved.

An example of a preferred production method includes using a doctor blade to wipe off the annealing separator and the insulating coating.

Another example of a preferred production method includes, when the decarburized annealed sheet to which the annealing separator has been applied is subjected to the final annealing, forming the decarburized annealed sheet into a coil shape with a surface on which the grooves are formed being arranged on the coil outer side, and then carrying out the final annealing.

Next, the methods of forming the grooves and the forsterite film and the insulating coating in the grooves are described in detail.

### [Method of forming grooves]

The linear grooves are formed on one or both sides of the steel sheet before application of the annealing separator (that is, before the final annealing), more specifically, on one or both sides of the hot-rolled sheet, the hot-rolled and annealed sheet, the cold-rolled sheet, or the decarburized annealed sheet. In particular, it is preferable to form linear grooves in the cold-rolled sheet after the final cold rolling and before the decarburization annealing. The grooves may disappear during cold rolling, and therefore there is no strong need to form the grooves before the final cold rolling. Further, in order to form forsterite, it is necessary to form fayalite, and since fayalite is normally formed during decarburization annealing, it is preferable to form grooves in the cold-rolled sheet before the decarburization annealing.

The grooves can be formed well by applying and attaching an etching resist ink, and then carrying out an electrolytic etching treatment on the non-coated areas. When forming a groove pattern, the non-coated areas are preferably formed by applying resist ink to the entire surface of one or both surfaces of a cold-rolled sheet, and then stripping and removing the ink by laser irradiation, or by resist printing. In particular, since it is important that the forsterite film is sufficiently formed at the bottom of the grooves, it is essential that the grooves be formed before the application of the annealing separator that forms the forsterite film and the final annealing.

Here, the grooves are formed in a direction transverse to the rolling direction, that is, in a linear shape extending in a direction at an angle from the rolling direction along the rolled surface. Hereinafter, the "direction transverse to the rolling direction" preferably refers to a deviation of the linear grooves from the direction perpendicular to the rolling direction within ±30°, which may be 0° (transverse direction of the steel sheet). Further, hereinafter, the term "linear" includes not only solid lines but also dotted lines, dashed lines, and other interrupted lines.

Other features of the grooves may be the same as those described above for the grain-oriented electrical steel sheet.

### [Applying of annealing separator]

After applying the annealing separator (preliminary application) to at least the surface or surfaces of the decarburized annealed sheet on which the grooves are formed, the annealing separator is wiped off, and then the annealing separator is applied to both surfaces of the decarburized annealed sheet (main application). Therefore, the annealing separator is applied twice to at least the surface or surfaces on which the grooves are formed. The annealing separator contains MgO as a main component and, in order to form the forsterite film having a desired thickness, an application amount of the annealing separator per side of the steel sheet is preferably 8 g/m² or more. The application amount is preferably 15 g/m² or less. The application amount is preferably in the range of about 8 g/m² to 15 g/m².

Here, "containing MgO as a main component" means that the annealing separator contains 75 mass% or more of MgO in solid content equivalent. The resulting solid forsterite film has a similar MgO content.

The procedure for applying the annealing separator involves applying the annealing separator (for example, an MgO suspension) to at least the surface or surfaces on which the grooves are formed (preliminary application), wiping off the suspension, and then applying the MgO suspension again to both surfaces (main application). Even when the preliminary application of the annealing separator is wiped off, the suspension in the grooves is not wiped off, and the suspension wiped off from areas other than the grooves flows into the grooves as a result of the wiping, making it possible to effectively apply a large amount of suspension to the grooves. At this time, a doctor blade is preferably used as a wiping means. Although this application method is preferred, other methods may be used to apply a large amount of suspension to the grooves. Unlike the above-mentioned method, known methods that do not involve wiping (such as roll coating) make it difficult to apply a sufficient amount of suspension to the grooves, and the forsterite film in the grooves often becomes thin. The thinner the forsterite film in the grooves, the less rough the film will be. Further, increasing the tension applied to the steel sheet becomes difficult, and reducing the iron loss and BF becomes difficult. On the other hand, according to the above-described technique, by allowing the annealing separator to sufficiently spread throughout the grooves, the Ra of the forsterite film at defined positions in the grooves after the subsequent final annealing can be made to be 5.00 µm or more. Further, iron loss is reduced, and a low BF is easily achieved.

### [Final annealing]

The decarburized annealed sheet with the annealing separator applied thereto is then subjected to final annealing for the purposes of secondary recrystallization and formation of the forsterite film. The final annealing is often carried out on the decarburized annealed sheet that has been coiled into a coil. At this time, it is preferable to carry out the final annealing on the decarburized annealed sheet as a coil with a surface on which the grooves are formed being on the coil outer side. The final annealing can cause the coil to become coil set, and therefore shape adjustment may be required in subsequent processes. Here, when the forsterite film is formed with grooves formed on the outer coil side, compressive stress is applied to the forsterite film in the grooves when the shape is adjusted to be flat by subsequent flattening annealing. A cause of damage such as cracks that increase the porosity of the forsterite film is tensile stress and therefore, in this case, damage to the forsterite film can be effectively avoided. On the other hand, when the forsterite film is formed with grooves formed on the inner coil side, when flattening shape adjustment is carried out, tensile stress is applied to the forsterite film in the grooves, which introduces damage such as cracks into the forsterite film and tends to increase the porosity.

Further, even in a case where the final-annealed sheet is bent in the direction opposite to the coil set during sheet passing after the forsterite film is formed, compressive stress is applied, and therefore the forsterite film is less likely to be damaged. Conversely, when the final-annealed sheet is bent in the same direction as the coil set, tensile stress is applied, but the amount of tensile stress applied is reduced by the amount of the coil set, and damage to the forsterite film is suppressed.

In this way, by controlling the shape of the decarburized annealed sheet in the final annealing as described above, it is possible to more effectively and stably reduce the iron loss of the grain-oriented electrical steel sheet and more effectively prevent an increase in BF.

### [Insulating coating and flattening annealing]

The insulating coating is applied to at least the surface or surfaces on which the grooves are formed of the final-annealed sheet obtained in this way (preliminary application), then the insulating coating is wiped off, and the insulating coating is further applied to both surfaces of the final-annealed sheet (main application). Therefore, the insulating coating is applied twice to at least the surface or surfaces on which the grooves are formed. The insulating coating means a coating that imparts tension to the steel sheet in order to reduce iron loss.

After the final annealing, the flattening annealing is carried out to adjust the shape, which is effective in improving the stacking factor when the grain-oriented electrical steel sheet is processed into an iron core. The flattening annealing is carried out at an annealing temperature of preferably 750 °C or higher. The flattening annealing temperature is preferably 950 °C or lower. The flattening annealing temperature is preferably in the range of about 750 °C to 950 °C. The flattening annealing is preferably carried out for an annealing time of 10 s or longer. The annealing time is preferably 200 s or shorter. The annealing time is preferably in the range of about 10 s to 200 s. The insulating coating is preferably formed before or after the flattening annealing.

In an example of the insulating coating formation process, an insulating coating liquid containing, for example, colloidal silica and phosphate is applied from above the forsterite film to at least the surface or surfaces of the final-annealed sheet on which the grooves are formed. As a suitable application procedure, an example is applying the insulating coating liquid to at least the surface or surfaces on which the grooves are formed (preliminary application), wiping off the insulating coating liquid, and then applying the insulating coating liquid again to both surfaces including the surface or surfaces on which the grooves are formed (main application). Even when the preliminary application of the insulating coating liquid is wiped off, the insulating coating liquid in the grooves is not wiped off, and the insulating coating liquid wiped off from areas other than the grooves flows into the grooves as a result of the wiping, making it possible to effectively apply a large amount of the insulating coating liquid to the grooves. At this time, a doctor blade is preferably used as a wiping means. The above application method is merely one suitable example, and there is no problem if a large amount of coating liquid is applied to the grooves by other methods. Unlike the above-mentioned method, known methods that do not involve wiping (for example, roll coating) make it difficult to apply a sufficient amount of insulating coating liquid to the grooves, and the insulating coating in the grooves may tend to become thin. When the insulating coating in the grooves becomes thin, increasing the tension applied to the steel sheet becomes difficult, and reducing the iron loss and BF becomes difficult. In contrast, according to the above-mentioned technique, by allowing the insulating coating liquid to sufficiently spread throughout the grooves, the average thickness of the insulating coating in the grooves of the final grain-oriented electrical steel sheet can be made 1.50 µm or more. Further, iron loss is reduced, and a low BF is easily achieved.

Normally, when an insulating coating as thick as 1.50 µm is formed, adhesion (peelability) becomes a technical problem. However, according to the present disclosure, by controlling the surface roughness of the forsterite film to be greater than before, as described above, peelability of the insulating coating is no longer a problem. Thereafter, a heat treatment can be optionally carried out under suitable temperature conditions (for example, 840 °C to 920 °C). In this way, a grain-oriented electrical steel sheet having the defined forsterite film and the insulating coating inside the grooves is finally obtainable.

### [Other processing]

In the method of producing a grain-oriented electrical steel sheet of the present disclosure, there are no particular limitations on processes that are not directly related to the magnetic domain refining treatment. The recommended and suitable chemical composition and other production conditions are described below.

### [Chemical composition]

The chemical composition of the slab for a grain-oriented electrical steel sheet is preferably a chemical composition that allows secondary recrystallization to occur. Further, when an inhibitor is used, for example, an AlN-based inhibitor may contain appropriate amounts of Al and N, and an MnS/MnSe-based inhibitor may contain appropriate amounts of Mn and S and/or Se. Of course, both inhibitors may be used together. In this case, the preferred contents of Al, N, S, and/or Se are respectively, Al: 0.01 mass% to 0.04 mass%, N: 0.005 mass% to 0.02 mass%, and S and/or Se: a total of 0.005 mass% to 0.03 mass%. In the final annealing, Al, N, S, and Se are purified and their respective content is reduced to the same level as inevitable impurity.

Further, the present disclosure can also be applied to a grain oriented electrical steel sheet in which the contents of Al, N, S, and Se are limited and no inhibitor is used. In such a case, the contents of Al, N, S, and Se are preferably limited to Al: 100 mass ppm or less, N: 50 mass ppm or less, S: 50 mass ppm or less, and Se: 50 mass ppm or less, respectively.

Specific examples of basic components and optionally added components of the grain oriented electrical steel sheet of the present disclosure are as follows.

### C: 0.08 mass% or less

When the C content exceeds 0.08 mass%, it becomes difficult to decrease the C content to 50 mass ppm or less, at which point magnetic aging will not occur during the manufacturing process. Accordingly, the C content is preferably 0.08 mass% or less. On the other hand, there is no particular need to set a lower limit since secondary recrystallization is possible even in material that does not contain C, and the lower limit may be 0 mass%. During decarburization annealing, C is removed from the steel and the content is decreased to the same level as inevitable impurity.

### Si: 2.0 mass% to 8.0 mass%

Si is an element effective in enhancing electrical resistance of the steel and decreasing the iron loss. When the Si content is less than 2.0 mass%, a sufficient iron loss reduction effect cannot be expected. When the Si content exceeds 8.0 mass%, workability significantly degrades and magnetic flux density is decreased as well. The Si content is therefore preferably 2.0 mass% or more. The Si content is preferably 8.0 mass% or less. The Si content is more preferably in the range of 2.0 mass% to 8.0 mass%.

### Mn: 0.005 mass% to 1.0 mass%

Mn is an element necessary to improve hot workability. However, when the content is less than 0.005 mass%, the addition effect is poor. When the Mn content exceeds 1.0 mass%, the magnetic flux density of a product sheet is decreased. The Mn content is therefore preferably 0.005 mass% or more. The Mn content is preferably 1.0 mass% or less. The Mn content is more preferably in the range of 0.005 mass% to 1.0 mass%.

Aside from the above basic components, the following elements may be suitably contained as components for improving magnetic properties.

At least one selected from Ni: 0.03 mass% to 1.50 mass%, Sn: 0.01 mass% to 1.50 mass%, Sb: 0.005 mass% to 1.50 mass%, Cu: 0.03 mass% to 3.0 mass%, P: 0.03 mass% to 0.50 mass%, Mo: 0.005 mass% to 0.10 mass%, and Cr: 0.03 mass% to 1.50 mass%
Ni is a useful element for improving the hot-rolled sheet microstructure and improving the magnetic properties. However, when the Ni content is less than 0.03 mass%, the magnetic property improving effect is low. When the Ni content is more than 1.50 mass%, secondary recrystallization is unstable, and the magnetic properties degrade. The Ni content is therefore preferably 0.03 mass% or more. The Ni content is preferably 1.50 mass% or less. The Ni content is more preferably in the range of 0.03 mass% to 1.50 mass%.

Further, Sn, Sb, Cu, P, Mo, and Cr are elements useful for improving the magnetic properties, yet when the content of each added element is below the lower limit described above, the effect of improving the magnetic properties is small. On the other hand, when the upper limit for each component described above is exceeded, the development of secondary recrystallized grains is inhibited. Therefore, the content of each added element is preferably in the above-described range. The balance other than the above components can be Fe and inevitable impurity that is incorporated during the production process.

The following describes other production conditions in the method of producing a grain-oriented electrical steel sheet.

### [Slab heating]

The slab for a grain-oriented electrical steel sheet having the above-mentioned chemical composition can be heated according to a conventional method. The heating temperature is preferably 1150 °C or higher. The heating temperature is preferably 1450 °C or lower. The heating temperature is more preferably in the range of 1150 °C to 1450 °C.

### [Hot rolling]

After the slab heating, the slab can be hot-rolled into a hot-rolled sheet. After casting, hot rolling may be carried out directly without heating. In the case of a thin slab or thinner cast steel, hot rolling may be carried out directly, or hot rolling may be omitted. When hot rolling is carried out, the rolling temperature in the rough rolling final pass is preferably 900 °C or higher and the rolling temperature in the finish rolling final pass is preferably 700 °C or higher.

### [Hot-rolled sheet annealing]

After the hot rolling, the hot-rolled sheet can be annealed as required, to form a hot-rolled and annealed sheet. At this time, in order to highly develop the Goss texture of the product sheet (grain-oriented electrical steel sheet), the hot-rolled sheet annealing temperature is preferably 800 °C or higher. The hot-rolled sheet annealing temperature is preferably 1100 °C or lower. The hot-rolled sheet annealing temperature is more preferably in the range of 800 °C to 1100 °C. When the hot-rolled sheet annealing temperature is lower than 800 °C, band texture in the hot rolling remains, making it difficult to realize uniformly-sized grain primary recrystallized texture and inhibiting the development of secondary recrystallization. On the other hand, when the hot-rolled sheet annealing temperature exceeds 1100 °C, the grain size after the hot-rolled sheet annealing coarsens too much, which makes it likely to become difficult to obtain a primary recrystallized texture of uniformly-sized grains.

### [Cold rolling]

The hot-rolled sheet after hot rolling or the hot-rolled and annealed sheet after hot-rolled sheet annealing is subjected to cold rolling once or two or more times with intermediate annealing in between to form a cold-rolled sheet having a final sheet thickness. The intermediate annealing temperature is preferably 800 °C or higher. The intermediate annealing temperature is preferably 1150 °C or lower. The intermediate annealing temperature is more preferably 800 °C to 1150 °C. Further, the intermediate annealing time is preferably 10 s or longer. The intermediate annealing time is preferably 100 s or shorter. The intermediate annealing time is preferably about 10 s to 100 s.

As described above, the grooves are preferably formed in the cold-rolled sheet.

### [Decarburization Annealing]

The cold-rolled sheet after the cold rolling is subjected to decarburization annealing to obtain a decarburized annealed sheet. In the decarburization annealing, the annealing temperature is preferably 750 °C or higher. The annealing temperature is preferably 900 °C or lower. The annealing temperature is more preferably about 750 °C to 900 °C. The atmospheric oxidizability (oxidation degree) PH₂O/PH₂ is preferably 0.25 or more. PH₂O/PH₂ is more preferably 0.60 or less. PH₂O/PH₂ is more preferably about 0.25 to 0.60. Further, the annealing time is preferably 50 s or longer. The annealing time is more preferably 300 s or shorter. The annealing time is more preferably about 50 s to 300 s.

### [Magnetic domain refining treatment]

The magnetic domain refining treatment can be carried out in accordance with the groove forming method described above.

In the magnetic domain refining treatment, which is one of the features of the present disclosure, linear grooves are formed between any of the above-mentioned processes before the application of the annealing separator. The linear grooves can be formed by local etching treatment, scribing with a blade or the like, rolling with a roller that has projections, or the like. Among these, the most preferred method is to apply an etching resist to the cold-rolled sheet after the final cold rolling by printing or the like, and then forming the linear grooves in the non-applied areas by electrolytic etching treatment. Further, the formation of a defined forsterite film at the bottom of the grooves is effective for magnetic domain refining, and therefore the formation of the grooves is carried out before the application of the annealing separator that forms the forsterite film, before the final annealing.

### [Applying of annealing separator]

The applying of the annealing separator is as described above. After the decarburization annealing, the annealing separator is applied by the method defined above, followed by the final annealing to form the forsterite film.

### [Final annealing]

The final annealing is as described above. After the application of the annealing separator, the final annealing is carried out for the purpose of secondary recrystallization and formation of the forsterite film, to obtain a final-annealed sheet. The annealing temperature of the final annealing is preferably 1100 °C or higher, and the annealing time is preferably 30 min or longer.

As described above, it is preferable to carry out the final annealing on the decarburized annealed sheet in the form of a coil with a grooved surface disposed on the coil outer side.

### [Insulating coating and flattening annealing]

The insulating coating and the flattening annealing are as described above. After the final annealing, the insulating coating is applied by the method defined above to form the insulating film. Further, shape is preferably adjusted by carrying out the flattening annealing. The flattening annealing may be carried out after the insulating coating, or the insulating coating may be applied after the flattening annealing.

### [Example 1]

Steel slabs (slabs for grain-oriented electrical steel sheets) were produced by continuous casting, each containing C: 0.07 mass%, Si: 3.4 mass%, Mn: 0.1 mass%, Ni: 0.2 mass%, Al: 240 mass ppm, S: 20 mass ppm, N: 90 mass ppm, and Se: 180 mass ppm, with the balance being Fe and inevitable impurity. Each slab was heated to 1430 °C and then hot rolled into a hot-rolled sheet having a thickness of 2.2 mm. The hot-rolled sheet was subjected to hot-rolled sheet annealing at 1100 °C for 20 s. Next, the hot-rolled and annealed sheet after the hot-rolled sheet annealing was cold-rolled to an intermediate thickness of 0.40 mm, and then subjected to intermediate annealing under the conditions of oxidation degree P(H₂O)/P(H₂) = 0.40, temperature: 1000 °C, and time: 70 s. Next, the hot-rolled and annealed sheet after the intermediate annealing was pickled with hydrochloric acid to remove subscale from the surface, and then cold-rolled again to obtain a cold-rolled sheet having a final sheet thickness of 0.23 mm.

Thereafter, resist ink was applied to one or both surfaces of the cold-rolled sheet, and then a laser was repeatedly scanned linearly across the coated surface in a direction transverse to the rolling direction at intervals of 3 mm along the rolling direction, to peel off and remove the resist ink at intervals of 3 mm along the rolling direction. The laser irradiation was carried out using a single-mode fiber laser with a galvanometer scanner system, and the resist ink was completely peeled off continuously from end to end in the transverse direction of the cold-rolled sheet.

As indicated in Table 1, the laser pattern, that is, the groove formation pattern, was carried out in four ways: on one side only (an offset from the direction perpendicular to the rolling direction: 1° to 30°, indicated as "one side" in the table); on both sides, parallel and staggered (the offset: 1° to 30°, indicated as "both sides, parallel, staggered" in the table); on both sides, parallel and in the same position on both sides (the offset: 1° to 30°, indicated as "both sides, same location" in the table); and on both sides with front and back intersecting (the offset: 1° to 30°, with symmetry to the rolling direction, indicated as "both sides, crossed" in the table). Thereafter, electrolytic etching was carried out so as to form grooves having a depth D of 25 µm and an approximately trapezoidal cross-section. After the electrolytic etching, the resist ink remaining on the steel sheet was removed.

Next, the steel was subjected to decarburization annealing at an oxidation degree P(H₂O)/P(H₂) = 0.44 and a soaking temperature of 820 °C for 300 s. After that, an annealing separator mainly composed of MgO was applied to the decarburized annealed sheet surface, and final annealing was carried out at 1160 °C for 10 h for the purposes of secondary recrystallization, forsterite film formation, and purification.

At this time, the annealing separator was applied in two ways: application using only a conventional roll coater, and application according to the present disclosure (preliminary application: introducing the annealing separator into the grooves using a roll coater + wiping off the annealing separator + main application: applying the annealing separator to the entire surface using a roll coater). In the table, the former is indicated as "Preliminary application and wiping: no" and the latter as "Preliminary application and wiping: yes". In order to promote the flow into the grooves, the viscosity of the annealing separator (suspension) was changed to 1000 Pa·s, 100 Pa·s, or 10 Pa·s. After the preliminary application of the annealing separator, the solution on the surface was wiped off with a doctor blade.

Further, during the final annealing, when grooves were formed on only one side of the decarburized annealed sheet, the annealing was carried out under two conditions: a coil in which the grooves were arranged on the coil outer side, and a coil in which the grooves were arranged on the coil inner side. Regarding the "Position of grooves in coil" in the table, the former is indicated as "outside" and the latter is indicated as "inside".

Further, an insulating coating consisting of 60 mass% colloidal silica and aluminum phosphate was applied and then baked at 850 °C to form the insulating coating, thereby obtaining each test piece. This insulating coating baking treatment also served as flattening annealing.

At this time, the insulating coating liquid was applied in two ways: application using only a conventional roll coater, and application according to the present disclosure (preliminary application: introducing the insulating coating into the grooves using a roll coater + wiping off the insulating coating + main application: applying the insulating coating to the entire surface using a roll coater). In the table, the former is indicated as "Preliminary application and wiping: no" and the latter as "Preliminary application and wiping: yes". In order to promote the flow of the insulating coating liquid into the grooves, the viscosity of the insulating coating liquid was changed to 1000 Pa·s, 100 Pa·s, or 10 Pa·s. After the preliminary application of the insulating coating liquid, the solution on the surface was wiped off with a doctor blade.

The surface roughness Ra of the forsterite film at the center of the groove of the grain-oriented electrical steel sheet thus obtained, the roughness coefficient of the forsterite film formed in the groove, and the average thickness of the insulating coating at the bottom of the groove were measured according to the methods described above and below.

First, the surface roughness Ra of the forsterite film was measured using a sample before flattening annealing and application of the insulating coating liquid (final-annealed sheet). For these samples, according to the above-mentioned method of measuring surface roughness Ra, the roughness was measured at 20 random locations (for 20 different grooves) on the sample for the distance t of 30 mm, and the Ra value was calculated. The average value of these 20 locations was taken as the surface roughness Ra of the forsterite film formed in the center of the groove.

The annealing temperature during the final annealing to form the forsterite film was higher than the annealing temperature to form the insulating coating, and therefore the surface roughness of the forsterite film did not change before and after the formation of the insulating coating.

The roughness coefficient of the forsterite film formed in the grooves was also measured using the final-annealed sheet in the same manner as in the measurement of Ra. Then, according to the above-mentioned method of measuring the roughness coefficient, 30 g of a sample without grooves was used in one analysis, and 30 g of a sample with grooves was used in one analysis, and measurements were taken for 20 samples of each, and the average value was used as the roughness coefficient result. The measurement was carried out using an automatic specific surface area and porosity analyzer of the TriStar^{®} II series (TriStar is a registered trademark in Japan, other countries, or both).

For the same reason as in the case of Ra, the roughness coefficient of the forsterite film does not change before and after the formation of the insulating coating.

Next, the average thickness of the insulating coating at the bottom of the groove was measured using a test piece after the insulating coating, which also served as flattening annealing, had been applied (grain-oriented electrical steel sheet). The average value of thickness of the insulating coating was obtained for these test pieces according to the method of measuring the average thickness described above.

Further, the test pieces were each sheared to a size of 30 mm × 280 mm, and then subjected to stress relief annealing (for the purpose of eliminating the influence of shearing) in an argon atmosphere at 800 °C for 3 h. Thereafter, the test pieces were subjected to magnetic property measurement using the Epstein test method.

The adhesion (peelability) of the insulating coating was evaluated by a bending peeling test, in which the grain-oriented electrical steel sheet including the coating was wrapped around a round bar, as described above, and the smallest diameter (mm) at which the insulating coating did not peel off was determined. This test evaluates the adhesion of the insulating coating in the grooves, and the insulating coating is more damaged in tension than in compression. For this reason, the test was carried out by wrapping the steel sheet so that the grooves were on the outside.

Table 1 lists the surface roughness Ra (average value) of the forsterite film at the center of the groove, the thickness (average value) of the insulating coating at the bottom of the groove, the roughness and roughness coefficient of the forsterite film in the groove, as well as the evaluation results of the adhesion (peelability) of the insulating coating and the magnetic properties of the grain-oriented electrical steel sheet.

**[Table 1]**

| No. | Groove formation | Applying of annealing separator | | Final annealing | Insulating coating application | | Properties of grain-oriented electrical steel sheet | | | | Evaluation | | Remarks |
|---|---|---|---|---|---|---|---|---|---|---|---|---|---|
| | Pattern | Preliminary application and wiping | Annealing separator viscosity (Pa•S) | Position of grooves in coil | Preliminary application and wiping | Insulating coating liquid viscosity (Pa•S) | Forsterite film surface roughness Ra (µm) | Insulating coating average thickness (µm) | Forsterite film roughness (-) | Forsterite film roughness coefficient (µm⁻¹) | Peelability (mm) | Iron loss W_{17/50} (W/kg) | |
| 1 | one side | yes | 10 | inside | no | 10 | 7.39 | 0.74 | 7.1 | 0.96 | 40 | 0.852 | Comparative Example |
| 2 | one side | yes | 10 | inside | no | 10 | 5.99 | 0.76 | 6.2 | 1.04 | 40 | 0.849 | Comparative Example |
| 3 | one side | yes | 100 | inside | no | 10 | 6.54 | 0.82 | 6.6 | 1.01 | 40 | 0.842 | Comparative Example |
| 4 | one side | yes | 1000 | inside | no | 10 | 9.73 | 0.86 | 16.1 | 1.65 | 30 | 0.834 | Comparative Example |
| 5 | one side | yes | 10 | inside | no | 100 | 7.36 | 1.15 | 6.9 | 0.94 | 40 | 0.844 | Comparative Example |
| 6 | one side | yes | 100 | inside | no | 100 | 7.63 | 1.25 | 128 | 1.68 | 40 | 0.833 | Comparative Example |
| 7 | one side | yes | 1000 | inside | no | 100 | 9.00 | 1.28 | 13.7 | 1.52 | 30 | 0.829 | Comparative Example |
| 8 | one side | yes | 10 | inside | no | 1000 | 6.56 | 0.63 | 6.3 | 0.96 | 40 | 0.859 | Comparative Example |
| 9 | one side | yes | 100 | inside | no | 1000 | 7.50 | 0.79 | 7.3 | 0.97 | 40 | 0.854 | Comparative Example |
| 10 | one side | yes | 1000 | inside | no | 1000 | 7.31 | 0.88 | 12.4 | 1.70 | 40 | 0.843 | Comparative Example |
| 11 | one side | yes | 10 | outside | no | 10 | 6.92 | 1.01 | 5.0 | 0.72 | 40 | 0.815 | Comparative Example |
| 12 | one side | yes | 100 | outside | no | 10 | 7.39 | 0.97 | 5.8 | 0.79 | 40 | 0.810 | Comparative Example |
| 13 | one side | yes | 1000 | outside | no | 10 | 8.87 | 1.08 | 4.3 | 0.48 | 30 | 0.797 | Comparative Example |
| 14 | one side | yes | 10 | outside | no | 100 | 6.62 | 1.18 | 0.9 | 0.13 | 40 | 0.794 | Comparative Example |
| 15 | one side | yes | 100 | outside | no | 100 | 6.67 | 1.25 | 1.3 | 0.20 | 40 | 0.786 | Comparative Example |
| 16 | one side | yes | 1000 | outside | no | 100 | 9.31 | 1.19 | 6.6 | 0.71 | 40 | 0.792 | Comparative Example |
| 17 | one side | yes | 10 | outside | no | 1000 | 6.27 | 0.71 | 2.1 | 0.33 | 40 | 0.812 | Comparative Example |
| 18 | one side | yes | 100 | outside | no | 1000 | 8.60 | 0.71 | 3.9 | 0.45 | 40 | 0.809 | Comparative Example |
| 19 | one side | yes | 1000 | outside | no | 1000 | 7.34 | 0.33 | 3.7 | 0.51 | 40 | 0.806 | Comparative Example |
| 20 | one side | no | 10 | inside | yes | 10 | 3.27 | 2.25 | 4.3 | 1.33 | 40 | 0.852 | Comparative Example |
| 21 | one side | no | 100 | inside | yes | 10 | 4.04 | 2.07 | 4.4 | 1.09 | 40 | 0.839 | Comparative Example |
| 22 | one side | no | 1000 | inside | yes | 10 | 1.51 | 2.20 | 1.8 | 1.19 | 40 | 0.860 | Comparative Example |
| 23 | one side | no | 10 | inside | yes | 100 | 3.12 | 2.09 | 5.5 | 1.77 | 40 | 0.842 | Comparative Example |
| 24 | one side | no | 100 | inside | yes | 100 | 3.91 | 2.07 | 6.3 | 1.62 | 30 | 0.832 | Comparative Example |
| 25 | one side | no | 1000 | inside | yes | 100 | 3.40 | 1.99 | 4.6 | 1.34 | 40 | 0.849 | Comparative Example |
| 26 | one side | no | 10 | inside | yes | 1000 | 2.42 | 2.67 | 3.8 | 1.55 | 40 | 0.837 | Comparative Example |
| 27 | one side | no | 100 | inside | yes | 1000 | 3.96 | 2.55 | 5.8 | 1.47 | 30 | 0.828 | Comparative Example |
| 28 | one side | no | 1000 | inside | yes | 1000 | 2.52 | 2.98 | 3.8 | 1.53 | 40 | 0.842 | Comparative Example |
| 29 | one side | no | 10 | outside | yes | 10 | 3.86 | 1.89 | 0.6 | 0.15 | 40 | 0.800 | Comparative Example |
| 30 | one side | no | 100 | outside | yes | 10 | 4.43 | 1.94 | 1.9 | 0.43 | 40 | 0.800 | Comparative Example |
| 31 | one side | no | 1000 | outside | yes | 10 | 2.62 | 2.18 | 1.7 | 0.65 | 40 | 0.826 | Comparative Example |
| 32 | one side | no | 10 | outside | yes | 100 | 3.45 | 2.11 | 1.1 | 0.32 | 40 | 0.792 | Comparative Example |
| 33 | one side | no | 100 | outside | yes | 100 | 3.87 | 2.28 | 3.1 | 0.80 | 30 | 0.801 | Comparative Example |
| 34 | one side | no | 1000 | outside | yes | 100 | 2.95 | 2.62 | 1.4 | 0.47 | 40 | 0.807 | Comparative Example |
| 35 | one side | no | 10 | outside | yes | 1000 | 2.58 | 2.64 | 1.5 | 0.58 | 40 | 0.794 | Comparative Example |
| 36 | one side | no | 100 | outside | yes | 1000 | 3.77 | 2.78 | 2.4 | 0.65 | 30 | 0.794 | Comparative Example |
| 37 | one side | no | 1000 | outside | yes | 1000 | 2.58 | 2.23 | 1.1 | 0.44 | 40 | 0.801 | Comparative Example |
| 38 | one side | no | 10 | inside | no | 10 | 3.05 | 0.78 | 4.6 | 1.50 | 50 | 0.882 | Comparative Example |
| 39 | one side | no | 100 | inside | no | 10 | 4.03 | 0.75 | 7.9 | 1.95 | 50 | 0.874 | Comparative Example |
| 40 | one side | no | 1000 | inside | no | 10 | 2.43 | 1.12 | 4.7 | 1.93 | 50 | 0.892 | Comparative Example |
| 41 | one side | no | 10 | inside | no | 100 | 3.60 | 1.32 | 6.7 | 1.85 | 50 | 0.874 | Comparative Example |
| 42 | one side | no | 100 | inside | no | 100 | 4.41 | 1.18 | 4.4 | 0.99 | 50 | 0.867 | Comparative Example |
| 43 | one side | no | 1000 | inside | no | 100 | 3.01 | 1.10 | 4.6 | 1.52 | 60 | 0.885 | Comparative Example |
| 44 | one side | no | 10 | inside | no | 1000 | 2.71 | 0.31 | 3.0 | 1.11 | 60 | 0.888 | Comparative Example |
| 45 | one side | no | 100 | inside | no | 1000 | 3.99 | 0.67 | 4.4 | 1.10 | 50 | 0.881 | Comparative Example |
| 46 | one side | no | 1000 | inside | no | 1000 | 3.23 | 0.52 | 4.2 | 1.29 | 50 | 0.903 | Comparative Example |
| 47 | one side | no | 10 | inside | yes | 10 | 3.90 | 2.23 | 7.0 | 1.80 | 40 | 0.850 | Comparative Example |
| 48 | one side | no | 100 | inside | yes | 10 | 4.42 | 2.26 | 6.0 | 1.35 | 40 | 0.844 | Comparative Example |
| 49 | one side | no | 1000 | inside | yes | 10 | 2.00 | 2.29 | 2.0 | 1.00 | 40 | 0.854 | Comparative Example |
| 50 | one side | no | 10 | inside | yes | 100 | 3.74 | 2.34 | 4.6 | 1.24 | 40 | 0.841 | Comparative Example |
| 51 | one side | no | 100 | inside | yes | 100 | 3.98 | 2.34 | 7.0 | 1.76 | 30 | 0.831 | Comparative Example |
| 52 | one side | no | 1000 | inside | yes | 100 | 2.89 | 2.71 | 3.5 | 1.21 | 40 | 0.850 | Comparative Example |
| 53 | one side | no | 10 | inside | yes | 1000 | 3.92 | 2.28 | 7.5 | 1.91 | 40 | 0.833 | Comparative Example |
| 54 | one side | no | 100 | inside | yes | 1000 | 3.91 | 2.34 | 5.8 | 1.48 | 30 | 0.825 | Comparative Example |
| 55 | one side | no | 1000 | inside | yes | 1000 | 2.54 | 2.69 | 4.3 | 1.69 | 40 | 0.842 | Comparative Example |
| 56 | one side | no | 10 | outside | no | 10 | 3.21 | 0.89 | 2.3 | 0.73 | 60 | 0.853 | Comparative Example |
| 57 | one side | no | 100 | outside | no | 10 | 4.49 | 1.02 | 1.7 | 0.37 | 50 | 0.825 | Comparative Example |
| 58 | one side | no | 1000 | outside | no | 10 | 3.39 | 1.06 | 2.5 | 0.75 | 50 | 0.860 | Comparative Example |
| 59 | one side | no | 10 | outside | no | 100 | 3.28 | 1.26 | 1.1 | 0.34 | 50 | 0.827 | Comparative Example |
| 60 | one side | no | 100 | outside | no | 100 | 3.96 | 1.21 | 2.2 | 0.56 | 50 | 0.826 | Comparative Example |
| 61 | one side | no | 1000 | outside | no | 100 | 1.57 | 1.20 | 0.8 | 0.49 | 60 | 0.844 | Comparative Example |
| 62 | one side | no | 10 | outside | no | 1000 | 2.91 | 0.90 | 1.3 | 0.46 | 50 | 0.848 | Comparative Example |
| 63 | one side | no | 100 | outside | no | 1000 | 4.12 | 0.31 | 1.9 | 0.45 | 50 | 0.839 | Comparative Example |
| 64 | one side | no | 1000 | outside | no | 1000 | 2.90 | 0.47 | 1.0 | 0.36 | 60 | 0.853 | Comparative Example |
| 65 | one side | no | 10 | outside | yes | 10 | 2.86 | 2.21 | 2.3 | 0.79 | 40 | 0.821 | Comparative Example |
| 66 | one side | no | 100 | outside | yes | 10 | 4.25 | 2.01 | 2.9 | 0.68 | 40 | 0.808 | Comparative Example |
| 67 | one side | no | 1000 | outside | yes | 10 | 1.59 | 2.27 | 0.9 | 0.59 | 40 | 0.819 | Comparative Example |
| 68 | one side | no | 10 | outside | yes | 100 | 2.56 | 2.65 | 2.0 | 0.79 | 40 | 0.811 | Comparative Example |
| 69 | one side | no | 100 | outside | yes | 100 | 4.00 | 2.67 | 2.7 | 0.67 | 30 | 0.799 | Comparative Example |
| 70 | one side | no | 1000 | outside | yes | 100 | 226 | 2.70 | 1.4 | 0.63 | 40 | 0.816 | Comparative Example |
| 71 | one side | no | 10 | outside | yes | 1000 | 3.72 | 2.76 | 1.3 | 0.34 | 30 | 0.788 | Comparative Example |
| 72 | one side | no | 100 | outside | yes | 1000 | 3.73 | 2.60 | 2.8 | 0.74 | 30 | 0.795 | Comparative Example |
| 73 | one side | no | 1000 | outside | yes | 1000 | 1.71 | 2.19 | 1.1 | 0.66 | 40 | 0.810 | Comparative Example |
| 74 | one side | yes | 100 | inside | no | 10 | 8.48 | 1.04 | 11.6 | 1.37 | 40 | 0.841 | Comparative Example |
| 75 | one side | yes | 1000 | inside | no | 10 | 9.49 | 0.93 | 17.0 | 1.79 | 30 | 0.835 | Comparative Example |
| 76 | one side | yes | 10 | inside | no | 100 | 6.91 | 1.15 | 5.7 | 0.82 | 40 | 0.843 | Comparative Example |
| 77 | one side | yes | 100 | inside | no | 100 | 7.14 | 1.30 | 10.4 | 1.46 | 30 | 0.832 | Comparative Example |
| 78 | one side | yes | 1000 | inside | no | 100 | 9.67 | 1.22 | 14.7 | 1.52 | 30 | 0.826 | Comparative Example |
| 79 | one side | yes | 10 | inside | no | 1000 | 6.27 | 0.67 | 9.4 | 1.50 | 40 | 0.858 | Comparative Example |
| 80 | one side | yes | 100 | inside | no | 1000 | 7.96 | 0.53 | 14.2 | 1.79 | 40 | 0.848 | Comparative Example |
| 81 | one side | yes | 1000 | inside | no | 1000 | 7.65 | 0.43 | 13.2 | 1.72 | 40 | 0.840 | Comparative Example |
| 82 | one side | yes | 10 | outside | no | 10 | 7.37 | 0.94 | 0.7 | 0.10 | 40 | 0.801 | Comparative Example |
| 83 | one side | yes | 100 | outside | no | 10 | 7.84 | 0.77 | 4.5 | 0.57 | 40 | 0.803 | Comparative Example |
| 84 | one side | yes | 1000 | outside | no | 10 | 8.72 | 0.82 | 2.0 | 0.23 | 30 | 0.782 | Comparative Example |
| 85 | one side | yes | 10 | outside | no | 100 | 6.47 | 1.32 | 0.8 | 0.13 | 40 | 0.796 | Comparative Example |
| 86 | one side | yes | 100 | outside | no | 100 | 6.61 | 1.33 | 2.8 | 0.42 | 30 | 0.794 | Comparative Example |
| 87 | one side | yes | 1000 | outside | no | 100 | 7.45 | 1.12 | 1.0 | 0.13 | 30 | 0.776 | Comparative Example |
| 88 | one side | yes | 10 | outside | no | 1000 | 7.38 | 0.32 | 4.6 | 0.62 | 40 | 0.825 | Comparative Example |
| 89 | one side | yes | 100 | outside | no | 1000 | 7.73 | 0.51 | 2.2 | 0.28 | 40 | 0.800 | Comparative Example |
| 90 | one side | yes | 1000 | outside | no | 1000 | 8.64 | 0.81 | 1.9 | 0.22 | 40 | 0.794 | Comparative Example |
| 91 | both sides, crossed | yes | 10 | both sides | no | 10 | 6.65 | 1.00 | 9.4 | 1.42 | 40 | 0.832 | Comparative Example |
| 92 | both sides, crossed | yes | 100 | both sides | no | 10 | 7.39 | 1.01 | 12.9 | 1.74 | 40 | 0.823 | Comparative Example |
| 93 | both sides, crossed | yes | 1000 | both sides | no | 10 | 8.18 | 0.87 | 14.6 | 1.78 | 30 | 0.815 | Comparative Example |
| 94 | both sides, crossed | yes | 10 | both sides | no | 100 | 6.50 | 1.18 | 7.0 | 1.07 | 40 | 0.821 | Comparative Example |
| 95 | both sides, crossed | yes | 100 | both sides | no | 100 | 6.95 | 1.25 | 7.2 | 1.04 | 40 | 0.816 | Comparative Example |
| 96 | both sides, crossed | yes | 1000 | both sides | no | 100 | 9.71 | 1.33 | 7.9 | 0.81 | 30 | 0.807 | Comparative Example |
| 97 | both sides, crossed | yes | 10 | both sides | no | 1000 | 6.13 | 0.42 | 6.3 | 1.02 | 40 | 0.840 | Comparative Example |
| 98 | both sides, crossed | yes | 100 | both sides | no | 1000 | 7.79 | 0.49 | 8.8 | 1.13 | 40 | 0.831 | Comparative Example |
| 99 | both sides, crossed | yes | 1000 | both sides | no | 1000 | 9.17 | 0.68 | 16.1 | 1.76 | 40 | 0.824 | Comparative Example |
| 100 | both sides, crossed | no | 10 | both sides | yes | 10 | 2.65 | 2.10 | 5.3 | 200 | 40 | 0.831 | Comparative Example |
| 101 | both sides, crossed | no | 100 | both sides | yes | 10 | 4.26 | 2.17 | 6.6 | 1.54 | 40 | 0.820 | Comparative Example |
| 102 | both sides, crossed | no | 1000 | both sides | yes | 10 | 3.35 | 2.15 | 3.4 | 1.03 | 40 | 0.835 | Comparative Example |
| 103 | both sides, crossed | no | 10 | both sides | yes | 100 | 2.71 | 2.24 | 4.8 | 1.78 | 40 | 0.825 | Comparative Example |
| 104 | both sides, crossed | no | 100 | both sides | yes | 100 | 3.87 | 2.38 | 3.3 | 0.86 | 30 | 0.819 | Comparative Example |
| 105 | both sides, crossed | no | 1000 | both sides | yes | 100 | 1.61 | 2.42 | 2.3 | 1.45 | 40 | 0.831 | Comparative Example |
| 106 | both sides, crossed | no | 10 | both sides | yes | 1000 | 3.92 | 2.25 | 7.5 | 1.90 | 30 | 0.813 | Comparative Example |
| 107 | both sides, crossed | no | 100 | both sides | yes | 1000 | 4.13 | 2.30 | 6.1 | 1.48 | 30 | 0.808 | Comparative Example |
| 108 | both sides, crossed | no | 1000 | both sides | yes | 1000 | 1.61 | 2.47 | 2.6 | 1.61 | 40 | 0.823 | Comparative Example |
| 109 | both sides, crossed | no | 10 | both sides | no | 10 | 2.90 | 0.73 | 4.0 | 1.39 | 60 | 0.861 | Comparative Example |
| 110 | both sides, crossed | no | 100 | both sides | no | 10 | 3.92 | 1.02 | 6.8 | 1.74 | 50 | 0.855 | Comparative Example |
| 111 | both sides, crossed | no | 1000 | both sides | no | 10 | 2.39 | 1.08 | 3.5 | 1.47 | 60 | 0.873 | Comparative Example |
| 112 | both sides, crossed | no | 10 | both sides | no | 100 | 2.87 | 1.25 | 4.8 | 1.68 | 50 | 0.855 | Comparative Example |
| 113 | both sides, crossed | no | 100 | both sides | no | 100 | 3.95 | 129 | 7.2 | 1.82 | 50 | 0.847 | Comparative Example |
| 114 | both sides, crossed | no | 1000 | both sides | no | 100 | 3.25 | 1.24 | 2.7 | 0.84 | 50 | 0.860 | Comparative Example |
| 115 | both sides, crossed | no | 10 | both sides | no | 1000 | 3.41 | 0.68 | 3.8 | 1.11 | 50 | 0.869 | Comparative Example |
| 116 | both sides, crossed | no | 100 | both sides | no | 1000 | 4.34 | 0.60 | 4.0 | 0.93 | 50 | 0.865 | Comparative Example |
| 117 | both sides, crossed | no | 1000 | both sides | no | 1000 | 1.92 | 0.89 | 3.4 | 1.78 | 50 | 0.880 | Comparative Example |
| 118 | both sides, crossed | no | 10 | both sides | yes | 10 | 3.58 | 2.19 | 6.0 | 1.66 | 40 | 0.831 | Comparative Example |
| 119 | both sides, crossed | no | 100 | both sides | yes | 10 | 4.09 | 2.08 | 4.2 | 1.02 | 40 | 0.823 | Comparative Example |
| 120 | both sides, crossed | no | 1000 | both sides | yes | 10 | 2.50 | 2.07 | 2.6 | 1.03 | 40 | 0.840 | Comparative Example |
| 121 | both sides, crossed | no | 10 | both sides | yes | 100 | 3.43 | 2.46 | 3.8 | 1.10 | 40 | 0.825 | Comparative Example |
| 122 | both sides, crossed | no | 100 | both sides | yes | 100 | 4.17 | 2.09 | 5.7 | 1.37 | 30 | 0.812 | Comparative Example |
| 123 | both sides, crossed | no | 1000 | both sides | yes | 100 | 3.43 | 2.64 | 6.3 | 1.84 | 40 | 0.829 | Comparative Example |
| 124 | both sides, crossed | no | 10 | both sides | yes | 1000 | 3.40 | 2.50 | 5.5 | 1.61 | 40 | 0.815 | Comparative Example |
| 125 | both sides, crossed | no | 100 | both sides | yes | 1000 | 4.51 | 3.00 | 8.0 | 1.77 | 30 | 0.807 | Comparative Example |
| 126 | both sides, crossed | no | 1000 | both sides | yes | 1000 | 2.07 | 2.97 | 3.5 | 1.67 | 40 | 0.820 | Comparative Example |
| 127 | both sides, crossed | yes | 10 | both sides | no | 10 | 6.24 | 0.87 | 7.3 | 1.17 | 40 | 0.830 | Comparative Example |
| 128 | both sides, crossed | yes | 100 | both sides | no | 10 | 8.54 | 1.00 | 16.7 | 1.95 | 40 | 0.821 | Comparative Example |
| 129 | both sides, crossed | yes | 1000 | both sides | no | 10 | 9.63 | 1.15 | 10.5 | 1.09 | 40 | 0.809 | Comparative Example |
| 130 | both sides, crossed | yes | 10 | both sides | no | 100 | 7.00 | 1.22 | 12.7 | 1.82 | 40 | 0.820 | Comparative Example |
| 131 | both sides, crossed | yes | 100 | both sides | no | 100 | 6.87 | 1.18 | 8.0 | 1.17 | 40 | 0.814 | Comparative Example |
| 132 | both sides, crossed | yes | 1000 | both sides | no | 100 | 8.45 | 1.20 | 8.3 | 0.98 | 30 | 0.807 | Comparative Example |
| 133 | both sides, crossed | yes | 10 | both sides | no | 1000 | 6.87 | 054 | 7.3 | 1.07 | 40 | 0.839 | Comparative Example |
| 134 | both sides, crossed | yes | 100 | both sides | no | 1000 | 7.60 | 0.39 | 7.0 | 0.92 | 40 | 0.833 | Comparative Example |
| 135 | both sides, crossed | yes | 1000 | both sides | no | 1000 | 7.56 | 094 | 13.5 | 1.78 | 40 | 0.822 | Comparative Example |
| 136 | both sides, same location | yes | 10 | both sides | no | 10 | 6.62 | 1.00 | 12.7 | 1.92 | 40 | 0.835 | Comparative Example |
| 137 | both sides, same location | yes | 100 | both sides | no | 10 | 6.67 | 0.95 | 8.9 | 1.33 | 40 | 0.829 | Comparative Example |
| 138 | both sides, same location | yes | 1000 | both sides | no | 10 | 8.41 | 1.12 | 9.3 | 1.11 | 30 | 0.815 | Comparative Example |
| 139 | both sides, same location | yes | 10 | both sides | no | 100 | 6.95 | 1.11 | 5.9 | 0.85 | 40 | 0.824 | Comparative Example |
| 140 | both sides, same location | yes | 100 | both sides | no | 100 | 8.37 | 1.17 | 8.5 | 1.01 | 30 | 0.818 | Comparative Example |
| 141 | both sides, same location | yes | 1000 | both sides | no | 100 | 8.76 | 1.24 | 14.4 | 1.64 | 30 | 0.809 | Comparative Example |
| 142 | both sides, same location | yes | 10 | both sides | no | 1000 | 6.77 | 0.68 | 10.0 | 1.48 | 40 | 0.843 | Comparative Example |
| 143 | both sides, same location | yes | 100 | both sides | no | 1000 | 8.21 | 0.44 | 9.5 | 1.16 | 40 | 0.836 | Comparative Example |
| 144 | both sides, same location | yes | 1000 | both sides | no | 1000 | 8.36 | 0.93 | 9.5 | 1.14 | 40 | 0.828 | Comparative Example |
| 145 | both sides, same location | no | 10 | both sides | yes | 10 | 3.92 | 2.04 | 6.8 | 1.73 | 40 | 0.834 | Comparative Example |
| 146 | both sides, same location | no | 100 | both sides | yes | 10 | 4.37 | 2.24 | 6.4 | 1.47 | 40 | 0.827 | Comparative Example |
| 147 | both sides, same location | no | 1000 | both sides | yes | 10 | 1.35 | 2.02 | 2.4 | 1.78 | 40 | 0.843 | Comparative Example |
| 148 | both sides, same location | no | 10 | both sides | yes | 100 | 3.96 | 2.58 | 6.1 | 1.54 | 40 | 0.824 | Comparative Example |
| 149 | both sides, same location | no | 100 | both sides | yes | 100 | 3.80 | 2.72 | 6.7 | 1.77 | 30 | 0.819 | Comparative Example |
| 150 | both sides, same location | no | 1000 | both sides | yes | 100 | 3.05 | 2.34 | 3.3 | 1.07 | 40 | 0.834 | Comparative Example |
| 151 | both sides, same location | no | 10 | both sides | yes | 1000 | 2.46 | 2.27 | 4.2 | 1.71 | 30 | 0.818 | Comparative Example |
| 152 | both sides, same location | no | 100 | both sides | yes | 1000 | 3.80 | 2.38 | 3.2 | 0.85 | 30 | 0.809 | Comparative Example |
| 153 | both sides, same location | no | 1000 | both sides | yes | 1000 | 2.47 | 2.84 | 2.9 | 1.16 | 40 | 0.825 | Comparative Example |
| 154 | both sides, same location | no | 10 | both sides | no | 10 | 3.91 | 1.12 | 7.6 | 1.95 | 60 | 0.865 | Comparative Example |
| *155* | both sides, same location | no | 100 | both sides | no | 10 | 3.82 | 1.16 | 3.5 | 0.92 | 50 | 0.857 | Comparative Example |
| 156 | both sides, same location | no | 1000 | both sides | no | 10 | 2.77 | 1.09 | 3.4 | 1.21 | 60 | 0.875 | Comparative Example |
| 157 | both sides, same location | no | 10 | both sides | no | 100 | 3.39 | 1.12 | 6.3 | 1.86 | 50 | 0.860 | Comparative Example |
| 158 | both sides, same location | no | 100 | both sides | no | 100 | 4.38 | 1.14 | 4.7 | 1.08 | 50 | 0.850 | Comparative Example |
| 159 | both sides, same location | no | 1000 | both sides | no | 100 | 3.21 | 1.13 | 6.3 | 1.96 | 50 | 0.863 | Comparative Example |
| 160 | both sides, same location | no | 10 | both sides | no | 1000 | 3.34 | 0.71 | 6.6 | 1.97 | 60 | 0.872 | Comparative Example |
| 161 | both sides, same location | no | 100 | both sides | no | 1000 | 4.47 | 0.93 | 7.9 | 1.76 | 50 | 0.863 | Comparative Example |
| 162 | both sides, same location | no | 1000 | both sides | no | 1000 | 2.37 | 0.57 | 4.0 | 1.68 | 60 | 0.885 | Comparative Example |
| 163 | both sides, same location | no | 10 | both sides | yes | 10 | 265 | 2.25 | 3.2 | 1.19 | 40 | 0.831 | Comparative Example |
| 164 | both sides, same location | no | 100 | both sides | yes | 10 | 4.36 | 1.90 | 8.4 | 1.93 | 40 | 0.827 | Comparative Example |
| 165 | both sides, same location | no | 1000 | both sides | yes | 10 | 1.66 | 2.16 | 2.9 | 1.74 | 40 | 0.844 | Comparative Example |
| 166 | both sides, same location | no | 10 | both sides | yes | 100 | 3.87 | 2.54 | 5.4 | 1.39 | 30 | 0.823 | Comparative Example |
| 167 | both sides, same location | no | 100 | both sides | yes | 100 | 4.45 | 2.49 | 8.6 | 1.94 | 30 | 0.820 | Comparative Example |
| 168 | both sides, same location | no | 1000 | both sides | yes | 100 | 2.95 | 2.44 | 4.2 | 1.42 | 40 | 0.835 | Comparative Example |
| 169 | both sides, same location | no | 10 | both sides | yes | 1000 | 3.23 | 2.32 | 5.5 | 1.71 | 30 | 0.819 | Comparative Example |
| 170 | both sides, same location | no | 100 | both sides | yes | 1000 | 4.51 | 2.71 | 8.1 | 1.79 | 30 | 0.807 | Comparative Example |
| 171 | both sides, same location | no | 1000 | both sides | yes | 1000 | 2.66 | 2.55 | 3.1 | 1.16 | 40 | 0.827 | Comparative Example |
| 172 | both sides, same location | yes | 10 | both sides | no | 10 | 7.34 | 1.11 | 10.0 | 1.36 | 40 | 0.835 | Comparative Example |
| 173 | both sides, same location | yes | 100 | both sides | no | 10 | 8.13 | 1.00 | 13.7 | 1.68 | 40 | 0.824 | Comparative Example |
| 174 | both sides, same location | yes | 1000 | both sides | no | 10 | 7.11 | 1.03 | 13.1 | 1.84 | 30 | 0.821 | Comparative Example |
| 175 | both sides, same location | yes | 10 | both sides | no | 100 | 6.18 | 1.18 | 5.1 | 0.83 | 40 | 0.824 | Comparative Example |
| 176 | both sides, same location | yes | 100 | both sides | no | 100 | 6.68 | 1.14 | 9.4 | 1.40 | 30 | 0.821 | Comparative Example |
| 177 | both sides, same location | yes | 1000 | both sides | no | 100 | 9.07 | 1.17 | 7.7 | 0.85 | 30 | 0.811 | Comparative Example |
| 178 | both sides, same location | yes | 10 | both sides | no | 1000 | 6.19 | 0.35 | 11.6 | 1.88 | 40 | 0.841 | Comparative Example |
| 179 | both sides, same location | yes | 100 | both sides | no | 1000 | 8.84 | 0.63 | 10.9 | 1.23 | 40 | 0.835 | Comparative Example |
| 180 | both sides, same location | yes | 1000 | both sides | no | 1000 | 9.02 | 0.83 | 15.5 | 1.72 | 40 | 0.827 | Comparative Example |
| 181 | both sides, parallel, staggered | yes | 10 | both sides | no | 10 | 7.34 | 1.14 | 9.9 | 1.35 | 40 | 0.827 | Comparative Example |
| 182 | both sides, parallel, staggered | yes | 100 | both sides | no | 10 | 7.44 | 0.87 | 14.3 | 1.92 | 40 | 0.814 | Comparative Example |
| 183 | both sides, parallel, staggered | yes | 1000 | both sides | no | 10 | 7.83 | 0.76 | 8.3 | 1.06 | 30 | 0.805 | Comparative Example |
| 184 | both sides, parallel, staggered | yes | 10 | both sides | no | 100 | 6.83 | 1.34 | 9.5 | 1.39 | 40 | 0.819 | Comparative Example |
| 185 | both sides, parallel, staggered | yes | 100 | both sides | no | 100 | 8.10 | 1.17 | 13.7 | 1.69 | 40 | 0.809 | Comparative Example |
| 186 | both sides, parallel, staggered | yes | 1000 | both sides | no | 100 | 9.71 | 1.22 | 14.8 | 1.52 | 30 | 0.806 | Comparative Example |
| 187 | both sides, parallel, staggered | yes | 10 | both sides | no | 1000 | 6.82 | 0.36 | 13.0 | 1.91 | 40 | 0.833 | Comparative Example |
| 188 | both sides, parallel, staggered | yes | 100 | both sides | no | 1000 | 7.78 | 0.72 | 8.5 | 1.09 | 40 | 0.826 | Comparative Example |
| 189 | both sides, parallel, staggered | yes | 1000 | both sides | no | 1000 | 7.60 | 0.56 | 11.1 | 1.46 | 40 | 0.818 | Comparative Example |
| 190 | both sides, parallel, staggered | no | 10 | both sides | yes | 10 | 2.87 | 1.91 | 2.8 | 0.98 | 40 | 0.823 | Comparative Example |
| 191 | both sides, parallel, staggered | no | 100 | both sides | yes | 10 | 4.36 | 2.11 | 6.9 | 1.59 | 40 | 0.818 | Comparative Example |
| 192 | both sides, parallel, staggered | no | 1000 | both sides | yes | 10 | 1.30 | 1.87 | 1.8 | 1.36 | 40 | 0.834 | Comparative Example |
| 193 | both sides, parallel, staggered | no | 10 | both sides | yes | 100 | 3.09 | 2.52 | 5.8 | 1.88 | 40 | 0.819 | Comparative Example |
| 194 | both sides, parallel, staggered | no | 100 | both sides | yes | 100 | 4.44 | 2.24 | 7.0 | 1.58 | 40 | 0.811 | Comparative Example |
| 195 | both sides, parallel, staggered | no | 1000 | both sides | yes | 100 | 3.42 | 2.16 | 4.3 | 1.25 | 40 | 0.827 | Comparative Example |
| 196 | both sides, parallel, staggered | no | 10 | both sides | yes | 1000 | 3.64 | 2.51 | 3.1 | 0.85 | 30 | 0.812 | Comparative Example |
| 197 | both sides, parallel, staggered | no | 100 | both sides | yes | 1000 | 4.21 | 2.11 | 3.6 | 0.85 | 30 | 0.806 | Comparative Example |
| 198 | both sides, parallel, staggered | no | 1000 | both sides | yes | 1000 | 1.08 | 2.45 | 1.8 | 1.65 | 40 | 0.822 | Comparative Example |
| 199 | both sides, parallel, staggered | no | 10 | both sides | no | 10 | 2.49 | 1.03 | 2.6 | 1.05 | 60 | 0.855 | Comparative Example |
| 200 | both sides, parallel, staggered | no | 100 | both sides | no | 10 | 4.04 | 0.88 | 5.4 | 1.34 | 50 | 0.849 | Comparative Example |
| 201 | both sides, parallel, staggered | no | 1000 | both sides | no | 10 | 3.16 | 0.95 | 5.6 | 1.77 | 60 | 0.865 | Comparative Example |
| 202 | both sides, parallel, staggered | no | 10 | both sides | no | 100 | 2.95 | 1.16 | 3.8 | 1.29 | 50 | 0.850 | Comparative Example |
| 203 | both sides, parallel, staggered | no | 100 | both sides | no | 100 | 4.22 | 1.20 | 3.8 | 0.91 | 50 | 0.845 | Comparative Example |
| 204 | both sides, parallel, staggered | no | 1000 | both sides | no | 100 | 3.33 | 1.16 | 5.8 | 1.75 | 50 | 0.861 | Comparative Example |
| 205 | both sides, parallel, staggered | no | 10 | both sides | no | 1000 | 3.58 | 0.65 | 4.7 | 1.31 | 50 | 0.868 | Comparative Example |
| 206 | both sides, parallel, staggered | no | 100 | both sides | no | 1000 | 3.99 | 0.42 | 7.9 | 1.97 | 60 | 0.856 | Comparative Example |
| 207 | both sides, parallel, staggered | no | 1000 | both sides | no | 1000 | 3.07 | 0.43 | 4.6 | 1.50 | 60 | 0.876 | Comparative Example |
| 208 | both sides, parallel, staggered | no | 10 | both sides | yes | 10 | 3.69 | 2.03 | 6.4 | 1.73 | 40 | 0.824 | Comparative Example |
| 209 | both sides, parallel, staggered | no | 100 | both sides | yes | 10 | 4.29 | 1.90 | 7.7 | 1.80 | 40 | 0.816 | Comparative Example |
| 210 | both sides, parallel, staggered | no | 1000 | both sides | yes | 10 | 1.82 | 2.09 | 2.4 | 1.34 | 40 | 0.835 | Comparative Example |
| 211 | both sides, parallel, staggered | no | 10 | both sides | yes | 100 | 3.56 | 2.06 | 4.2 | 1.18 | 40 | 0.820 | Comparative Example |
| 212 | both sides, parallel, staggered | no | 100 | both sides | yes | 100 | 4.35 | 2.56 | 7.6 | 1.75 | 30 | 0.809 | Comparative Example |
| 213 | both sides, parallel, staggered | no | 1000 | both sides | yes | 100 | 1.34 | 2.09 | 2.0 | 1.52 | 40 | 0.828 | Comparative Example |
| 214 | both sides, parallel, staggered | no | 10 | both sides | yes | 1000 | 3.54 | 2.25 | 6.2 | 1.76 | 40 | 0.809 | Comparative Example |
| 215 | both sides, parallel, staggered | no | 100 | both sides | yes | 1000 | 4.07 | 2.80 | 3.5 | 0.85 | 30 | 0.805 | Comparative Example |
| 216 | both sides, parallel, staggered | no | 1000 | both sides | yes | 1000 | 2.31 | 2.78 | 3.6 | 1.55 | 40 | 0.815 | Comparative Example |
| 217 | both sides, parallel, staggered | yes | 10 | both sides | no | 10 | 7.55 | 0.70 | 6.7 | 0.89 | 40 | 0.827 | Comparative Example |
| 218 | both sides, parallel, staggered | yes | 100 | both sides | no | 10 | 6.63 | 0.86 | 12.7 | 1.91 | 40 | 0.819 | Comparative Example |
| 219 | both sides, parallel, staggered | yes | 1000 | both sides | no | 10 | 8.62 | 0.92 | 12.0 | 1.39 | 30 | 0.811 | Comparative Example |
| 220 | both sides, parallel, staggered | yes | 10 | both sides | no | 100 | 7.39 | 1.21 | 11.8 | 1.60 | 40 | 0.819 | Comparative Example |
| 221 | both sides, parallel, staggered | yes | 100 | both sides | no | 100 | 8.21 | 1.35 | 9.3 | 1.13 | 30 | 0.809 | Comparative Example |
| 222 | both sides, parallel, staggered | yes | 1000 | both sides | no | 100 | 9.31 | 1.17 | 8.9 | 0.96 | 30 | 0.802 | Comparative Example |
| 223 | both sides, parallel, staggered | yes | 10 | both sides | no | 1000 | 6.37 | 0.58 | 11.0 | 1.72 | 40 | 0.835 | Comparative Example |
| 224 | both sides, parallel, staggered | yes | 100 | both sides | no | 1000 | 8.52 | 0.71 | 15.0 | 1.76 | 40 | 0.824 | Comparative Example |
| 225 | both sides, parallel, staggered | yes | 1000 | both sides | no | 1000 | 8.73 | 0.69 | 17.0 | 1.95 | 40 | 0.817 | Comparative Example |
| 226 | one side | yes | 10 | inside | yes | 10 | 5.02 | 1.51 | 6.9 | 1.38 | 20 | 0.720 | Example |
| 227 | one side | yes | 100 | inside | yes | 10 | 7.70 | 2.14 | 7.4 | 0.96 | 10 | 0.701 | Example |
| 228 | one side | yes | 1000 | inside | yes | 10 | 8.68 | 2.01 | 11.3 | 1.30 | 20 | 0.689 | Example |
| 229 | one side | yes | 10 | inside | yes | 100 | 6.13 | 2.07 | 13.3 | 2.17 | 20 | 0.703 | Example |
| 230 | one side | yes | 100 | inside | yes | 100 | 7.13 | 2.37 | 13.4 | 1.88 | 20 | 0.691 | Example |
| 231 | one side | yes | 1000 | inside | yes | 100 | 8.96 | 2.70 | 15.9 | 1.77 | 10 | 0.674 | Example |
| 232 | one side | yes | 10 | inside | yes | 1000 | 6.55 | 2.45 | 13.1 | 2.00 | 15 | 0.690 | Example |
| 233 | one side | yes | 100 | inside | yes | 1000 | 6.86 | 2.63 | 7.7 | 1.12 | 10 | 0.674 | Example |
| 234 | one side | yes | 1000 | inside | yes | 1000 | 8.92 | 2.94 | 17.6 | 1.97 | 15 | 0.656 | Example |
| 235 | one side | yes | 10 | outside | yes | 10 | 6.16 | 1.88 | 1.6 | 0.26 | 20 | 0.625 | Example |
| 236 | one side | yes | 100 | outside | yes | 10 | 6.91 | 2.32 | 3.1 | 0.45 | 15 | 0.626 | Example |
| 237 | one side | yes | 1000 | outside | yes | 10 | 7.45 | 1.96 | 2.4 | 0.32 | 20 | 0.597 | Example |
| 238 | one side | yes | 10 | outside | yes | 100 | 5.47 | 2.03 | 4.1 | 0.75 | 10 | 0.627 | Example |
| 239 | one side | yes | 100 | outside | yes | 100 | 6.77 | 2.58 | 1.9 | 0.28 | 10 | 0.590 | Example |
| 240 | one side | yes | 1000 | outside | yes | 100 | 7.27 | 2.08 | 0.8 | 0.11 | 10 | 0.577 | Example |
| 241 | one side | yes | 10 | outside | yes | 1000 | 6.34 | 2.26 | 3.0 | 0.47 | 10 | 0.607 | Example |
| 242 | one side | yes | 100 | outside | yes | 1000 | 8.26 | 2.36 | 3.9 | 0.47 | 10 | 0.591 | Example |
| 243 | one side | yes | 1000 | outside | yes | 1000 | 9.76 | 2.32 | 7.7 | 0.79 | 15 | 0.593 | Example |
| 244 | both sides, crossed | yes | 10 | both sides | yes | 10 | 6.22 | 1.53 | 5.9 | 0.95 | 15 | 0.679 | Example |
| 245 | both sides, crossed | yes | 100 | both sides | yes | 10 | 7.23 | 2.22 | 12.1 | 1.67 | 20 | 0.654 | Example |
| 246 | both sides, crossed | yes | 1000 | both sides | yes | 10 | 9.21 | 2.20 | 14.0 | 1.52 | 15 | 0.650 | Example |
| 247 | both sides, crossed | yes | 10 | both sides | yes | 100 | 6.16 | 2.58 | 8.9 | 1.44 | 20 | 0.663 | Example |
| 248 | both sides, crossed | yes | 100 | both sides | yes | 100 | 8.35 | 2.52 | 16.3 | 1.95 | 20 | 0.639 | Example |
| 249 | both sides, crossed | yes | 1000 | both sides | yes | 100 | 8.54 | 2.67 | 8.3 | 0.97 | 10 | 0.627 | Example |
| 250 | both sides, crossed | yes | 10 | both sides | yes | 1000 | 7.44 | 2.92 | 14.0 | 1.88 | 10 | 0.642 | Example |
| 251 | both sides, crossed | yes | 100 | both sides | yes | 1000 | 7.16 | 2.74 | 10.8 | 1.51 | 20 | 0.629 | Example |
| 252 | both sides, crossed | yes | 1000 | both sides | yes | 1000 | 8.23 | 2.31 | 16.5 | 2.00 | 15 | 0.617 | Example |
| 253 | both sides, same location | yes | 10 | both sides | yes | 10 | 7.40 | 1.95 | 7.6 | 1.03 | 20 | 0.686 | Example |
| 254 | both sides, same location | yes | 100 | both sides | yes | 10 | 7.33 | 1.83 | 12.5 | 1.70 | 20 | 0.672 | Example |
| 255 | both sides, same location | yes | 1000 | both sides | yes | 10 | 7.97 | 1.85 | 14.8 | 1.86 | 20 | 0.660 | Example |
| 256 | both sides, same location | yes | 10 | both sides | yes | 100 | 6.86 | 2.52 | 7.1 | 1.04 | 20 | 0.672 | Example |
| 257 | both sides, same location | yes | 100 | both sides | yes | 100 | 7.37 | 2.25 | 11.3 | 1.54 | 10 | 0.656 | Example |
| 258 | both sides, same location | yes | 1000 | both sides | yes | 100 | 7.98 | 2.31 | 7.7 | 0.97 | 10 | 0.638 | Example |
| 259 | both sides, same location | yes | 10 | both sides | yes | 1000 | 6.03 | 2.65 | 10.4 | 1.72 | 10 | 0.657 | Example |
| 260 | both sides, same location | yes | 100 | both sides | yes | 1000 | 6.63 | 2.21 | 7.6 | 1.14 | 15 | 0.636 | Example |
| 261 | both sides, same location | yes | 1000 | both sides | yes | 1000 | 8.61 | 2.11 | 14.7 | 1.71 | 10 | 0.628 | Example |
| 262 | both sides, parallel, staggered | yes | 10 | both sides | yes | 10 | 6.43 | 1.56 | 5.7 | 0.89 | 20 | 0.674 | Example |
| 263 | both sides, parallel, staggered | yes | 100 | both sides | yes | 10 | 7.04 | 2.18 | 9.5 | 1.35 | 10 | 0.653 | Example |
| 264 | both sides, parallel, staggered | yes | 1000 | both sides | yes | 10 | 9.30 | 1.84 | 18.4 | 1.98 | 10 | 0.638 | Example |
| 265 | both sides, parallel, staggered | yes | 10 | both sides | yes | 100 | 7.52 | 2.36 | 12.0 | 1.59 | 20 | 0.656 | Example |
| 266 | both sides, parallel, staggered | yes | 100 | both sides | yes | 100 | 8.04 | 2.48 | 13.1 | 1.63 | 10 | 0.642 | Example |
| 267 | both sides, parallel, staggered | yes | 1000 | both sides | yes | 100 | 8.29 | 2.19 | 13.6 | 1.64 | 10 | 0.623 | Example |
| 268 | both sides, parallel, staggered | yes | 10 | both sides | yes | 1000 | 5.89 | 2.53 | 13.1 | 2.22 | 10 | 0.643 | Example |
| 269 | both sides, parallel, staggered | yes | 100 | both sides | yes | 1000 | 8.55 | 2.97 | 7.5 | 0.88 | 10 | 0.624 | Example |
| 270 | both sides, parallel, staggered | yes | 1000 | both sides | yes | 1000 | 8.35 | 2.58 | 11.8 | 1.41 | 20 | 0.604 | Example |

| | | | | | | | | | | | | | |
|---|---|---|---|---|---|---|---|---|---|---|---|---|---|
| Forsterite film roughness: true surface area of grooves divided by apparent surface area Forsterite film roughness coefficient: above roughness divided by Ra | | | | | | | | | | | | | |

As indicated in Table 1, when a forsterite film satisfying a defined surface roughness was formed in the grooves according to the present disclosure, the insulating coating on the forsterite film could be made thick to a defined extent, the adhesion (peelability) of the insulating coating was improved, and a grain-oriented electrical steel sheet having excellent magnetic properties was obtained.

Further, the method according to the present disclosure provides grain-oriented electrical steel sheets that stably exhibit good magnetic properties, regardless of the viscosity of the annealing separator (suspension) and the insulating coating liquid. Further, grain-oriented electrical steel sheets that stably exhibit good magnetic properties regardless of the groove pattern formed therein are obtainable.

Thus, by using the grain-oriented electrical steel sheet of the present disclosure, which has excellent adhesion despite the thick insulating coating in the grooves and achieves low iron loss, it is thought that the BF of a transformer can also be reduced.

In particular, when the roughness coefficient of the forsterite film further satisfies a condition of being 0.8 or less, even better magnetic properties are obtainable.

Further, for grain-oriented electrical steel sheets in which the grooves were formed on only one side, the roughness coefficient was smaller and the iron loss was further reduced when final annealing was carried out with the grooves on the coil outer side than when final annealing was carried out with the grooves on the coil inner side.

Further, for grain-oriented electrical steel sheets in which the grooves were formed on both sides, the magnetic properties were better than those of the Comparative Examples due to the magnetic domain refining effect of the grooves on the front and back sides. However, the forsterite film formed on either side is easily damaged, and therefore the roughness coefficient tended to be larger than when grooves were formed on only one side and the grooves were on the outer side during final annealing. As a result, due to the balance between the improved magnetic domain refining effect from both sides and the increased roughness coefficient, the iron loss characteristics were almost the same as when the grooves were formed on only one side and on the coil outer side when final annealing was carried out.

### REFERENCE SIGNS LIST

- 1: grain-oriented electrical steel sheet (steel sheet)
- 2: groove
- 20: bottom
- 21: center
- 3: forsterite film
- 4: insulating coating

## Claims

1. A grain-oriented electrical steel sheet comprising, on one or both sides of a steel sheet, grooves extending linearly in a direction transverse to the rolling direction of the steel sheet and arranged at intervals along the rolling direction, and, on both sides of the steel sheet, a forsterite film and an insulating coating in this order from the steel sheet surface, wherein,
in a cross-section perpendicular to the extension direction of the grooves, the forsterite film formed at a center position of the grooves has a surface roughness Ra of 5.00 µm or more, and the insulating coating at the bottom of the grooves has an average thickness of 1.50 µm or more.

2. The grain-oriented electrical steel sheet according to claim 1, wherein the forsterite film formed in the grooves has a roughness coefficient of 0.8 or less.

3. A method of producing a grain-oriented electrical steel sheet, the method comprising: hot rolling a slab for a grain-oriented electrical steel sheet to obtain a hot-rolled sheet; then subjecting the hot-rolled sheet to hot-rolled sheet annealing as required to obtain a hot-rolled and annealed sheet; then cold rolling the hot-rolled sheet or the hot-rolled and annealed sheet once or twice or more with intermediate annealing therebetween to finish the cold-rolled sheet to a final sheet thickness; then subjecting the cold-rolled sheet to decarburization annealing to obtain a decarburized annealed sheet; then applying an annealing separator mainly composed of MgO to the surface of the decarburized annealed sheet; then subjecting the decarburized annealed sheet to final annealing to obtain a final-annealed sheet; and then applying an insulating coating to the final-annealed sheet, the method further comprising:
(1) before applying the annealing separator, forming grooves on one or both surfaces of the hot-rolled sheet, the hot-rolled and annealed sheet, the cold-rolled sheet, or the decarburized annealed sheet, the grooves extending linearly in a direction transverse to the rolling direction of the steel sheet and arranged at intervals along the rolling direction;
(2) after applying the annealing separator to at least the surface or surfaces of the decarburized annealed sheet on which the grooves are formed, wiping off the annealing separator, and then applying annealing separator to both surfaces of the decarburized annealed sheet; and
(3) after applying the insulating coating to at least the surface or surfaces of the final-annealed sheet on which the grooves are formed, wiping off the insulating coating, and then applying insulating coating to both surfaces of the final-annealed sheet.

4. The method of producing a grain-oriented electrical steel sheet according to claim 3, wherein a doctor blade is used to wipe off the annealing separator and the insulating coating.

5. The method of producing a grain-oriented electrical steel sheet according to claim 3 or 4, wherein, when the decarburized annealed sheet to which the annealing separator has been applied is subjected to the final annealing, the decarburized annealed sheet is formed into a coil shape with the surface or one of the surfaces on which the grooves are formed being arranged on the coil outer side, and then the final annealing is carried out.
